(19) Europäisches Patentamt
European Patent Office
Office européen des brevets

(11) EP 4 227 331 A1

(12) **EUROPEAN PATENT APPLICATION**
published in accordance with Art. 153(4) EPC

(43) Date of publication:
**16.08.2023 Bulletin 2023/33**

(21) Application number: **21877649.0**

(22) Date of filing: **06.10.2021**

(51) International Patent Classification (IPC):
***C08F 210/00*** *(2006.01)* ***C08L 23/00*** *(2006.01)*
***C08L 23/12*** *(2006.01)* ***C08L 101/00*** *(2006.01)*

(52) Cooperative Patent Classification (CPC):
**C08F 210/00; C08L 23/00; C08L 23/12; C08L 101/00**

(86) International application number:
**PCT/JP2021/036930**

(87) International publication number:
**WO 2022/075350 (14.04.2022 Gazette 2022/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.10.2020 JP 2020169063**

(71) Applicant: **Mitsui Chemicals, Inc.**
**Tokyo 104-0028 (JP)**

(72) Inventor: **ABE Shota**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **RESIN COMPOSITION**

(57) A resin composition including 25 to 99.99% by mass of a thermoplastic resin (A) having a weight-average molecular weight (Mw) of 50,000 or more in terms of polystyrene as measured by gel permeation chromatography (GPC), and 0.01 to 15% by mass of a copolymer (B) containing a structural unit derived from an α-olefin having 3 or more carbon atoms and satisfying the following requirements (b-1) to (b-3): (b-1) the kinematic viscosity at 100°C is 10 to 5,000 $mm^2/s$; (b-2) the content of a structural unit derived from an α-olefin having 3 or more carbon atoms in the range of 60 to 85 mol%; and (b-3) the weight-average molecular weight (Mw) in terms of polystyrene as measured by gel permeation chromatography (GPC) is 1,000 to 30,000 and the molecular weight distribution (Mw/Mn) is 2.5 or less.

EP 4 227 331 A1

## Description

### TECHNICAL FIELD

The present invention relates to a resin composition having good moldability and capable of suppressing the occurrence of bleeding in a molded body, for example.

### BACKGROUND ART

Conventionally, thermoplastic resins have been used in various applications as molded bodies such as films, sheets, and fibers by extrusion molding. In order to obtain a molded body having good mechanical properties by extrusion molding, it is general to use a resin having a low melt flow rate (MFR), but a resin having a low MFR causes many problems in moldability such as poor engagement with a screw in an extruder, poor melting of the resin, instability of a discharge amount and limitation in extrusion rate caused by high extrusion torque. In addition, since the problems occur depending on variations in physical properties, shape of a resin, and specifications of an extruder, in recent years, improvement in moldability has been more strongly required in order to solve such problems.
As a general method for improving moldability at the time of extrusion molding, for example, a method of adding a molding aid to a resin and molding the resin is known. For example, a molding method in which a molding aid such as oil or polyethylene wax is applied to a thermoplastic resin to be molded has been studied (for example, Patent Literatures 1 and 2).
Attempts have also been made to blend liquid polyolefins as plasticizers into thermoplastic resins.
However, since the liquid polyolefin has poor compatibility with polypropylene, for example, there is a problem in that for example, bleeding occurs in the obtained molded body when the liquid polyolefin is blended with a thermoplastic resin such as polypropylene and molded.

### CITATION LIST

### PATENT LITERATURE

Patent Literature 1: JPH0580492B2
Patent Literature 2: JP2003-528948A

### SUMMARY OF INVENTION

### TECHNICAL PROBLEM

An object of the present invention is to provide a resin composition which has good compatibility and does not cause problems such as bleeding in a molded body.

### SOLUTION TO PROBLEM

The present invention relates to, for example, the following [1] to [5]:

[1] A resin composition comprising:

25 to 99.99% by mass of a thermoplastic resin (A) having a weight-average molecular weight (Mw) of 50,000 or more in terms of polystyrene as measured by gel permeation chromatography (GPC); and
0.01 to 15% by mass of a copolymer (B) containing a structural unit derived from an $\alpha$-olefin having 3 or more carbon atoms and satisfying the following requirements (b-1) to (b-3):
(b-1) the kinematic viscosity at 100°C is 10 to 5,000 $mm^2/s$; (b-2) the content of a structural unit derived from an $\alpha$-olefin having 3 or more carbon atoms is in the range of 60 to 85 mol%; and (b-3) the weight-average molecular weight (Mw) in terms of polystyrene as measured by gel permeation chromatography (GPC) is 1,000 to 30,000 and the molecular weight distribution (Mw/Mn) is 2.5 or less.

[2] The resin composition according to [1], wherein the thermoplastic resin (A) is a polyolefin.
[3] The resin composition according to [1] or [2], wherein the $\alpha$-olefin having 3 or more carbon atoms is propylene.

[4] The resin composition according to any one of [1] to [3], wherein the thermoplastic resin (A) is a polypropylene.
[5] A method for producing the resin composition according to [1], comprising:

a step (1) of performing the following method ($\alpha$) to obtain the copolymer (B), which further satisfies the following requirements (b-4) and (b-5); and
a step (2) of melt-kneading the thermoplastic resin (A), the copolymer (B), and optionally an additive to obtain a resin composition,
wherein
(b-4) the methyl group index measured by $^{1}$H-NMR is in a range of 60 to 1300; and

(b-5) no melting peak is observed in differential scanning calorimetry (DSC) in a temperature range of -100°C to 150°C, method ($\alpha$): a method comprising a step of solution polymerizing ethylene and an $\alpha$-olefin having 3 or more carbon atoms in the presence of a catalytic system, the catalytic system comprising:

a bridged metallocene compound (a) represented by the following formula 1 and at least one compound (b) selected from the group consisting of an organoaluminumoxy compound (b1) and a compound (b2) forming an ion pair by reacting with the bridged metallocene compound (a),

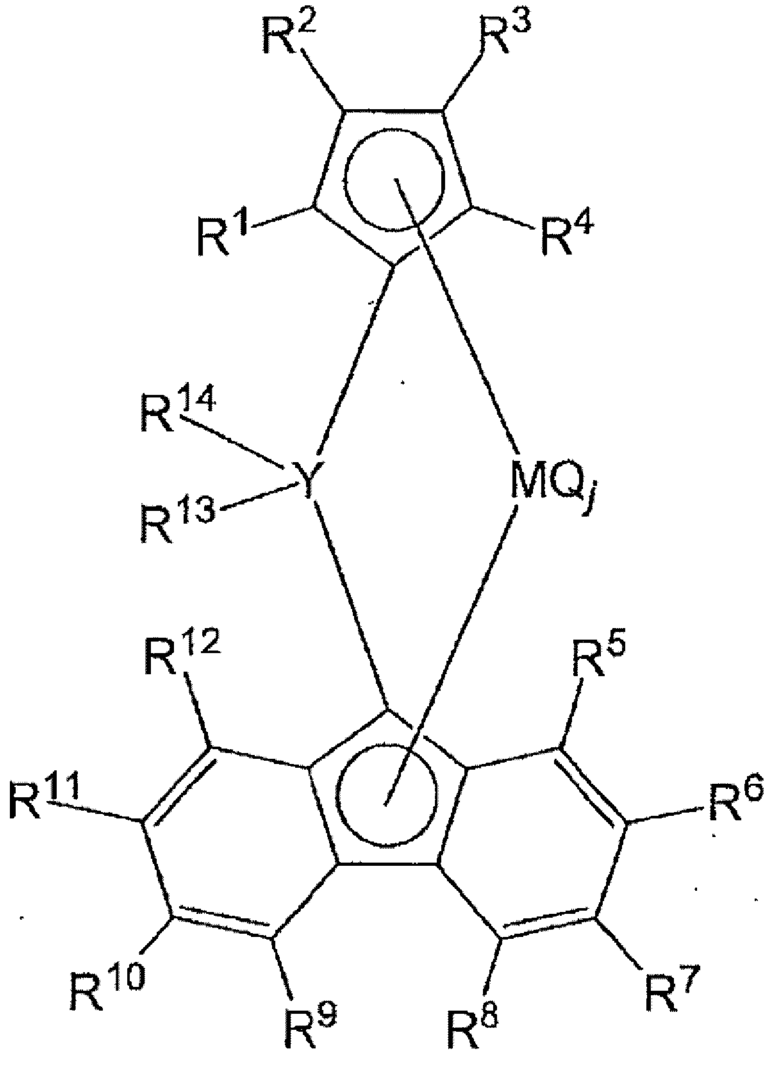

··· (Formula 1)

wherein $R^1$, $R^2$, $R^3$, $R^4$, $R^5$, $R^8$, $R^9$ and $R^{12}$ are each independently a hydrogen atom, a hydrocarbon group, or a silicon-containing hydrocarbon group, and a plurality of adjacent groups may be linked to each other to form a ring structure;

$R^6$ and $R^{11}$ are the same group and are a hydrogen atom, a hydrocarbon group, or a silicon-containing hydrocarbon group;

$R^7$ and $R^{10}$ are the same group and are a hydrogen atom, a hydrocarbon group, or a silicon-containing hydrocarbon group;

$R^6$ and $R^7$ may be bonded to a hydrocarbon having 2 to 3 carbon atoms to form a ring structure;

$R^{10}$ and $R^{11}$ may be bonded to a hydrocarbon having 2 to 3 carbon atoms to form a ring structure;

$R^6$, $R^7$, $R^{10}$, and $R^{11}$ are not hydrogen atoms at the same time;

Y is a carbon atom or a silicon atom;

$R^{13}$ and $R^{14}$ are each independently an aryl group;

M is Ti, Zr, or Hf;

Q is independently a halogen atom, a hydrocarbon group, an anionic ligand or a neutral ligand capable of coordinating to a lone pair of electrons; and

j is an integer of 1 to 4.

ADVANTAGEOUS EFFECTS OF INVENTION

The resin composition of the present invention has good compatibility and, since a thermoplastic resin such as polypropylene is mixed with an $\alpha$-olefin copolymer as a plasticizer in an excellent compatible state, does not cause problems such as bleeding.

DESCRIPTION OF EMBODIMENTS

The present invention will be described in detail below.

A resin composition according to the present invention includes a thermoplastic resin (A) and a copolymer (B) described below.

[Thermoplastic resin (A)]

The thermoplastic resin (A) used in the present invention is not particularly limited, and examples thereof include polyolefins such as low-density polyethylene, medium-density polyethylene, high-density polyethylene, linear low-density polyethylene, polypropylene, polybutene, cyclic olefin polymers, ethylene-propylene copolymers and cyclic olefin copolymers; styrene polymers such as polystyrene, acrylonitrile-styrene copolymers, acrylonitrile-butadienestyrene copolymers, styrene-butadiene copolymers and styreneisoprene copolymers, and hydrogenated products thereof; polyvinyl chlorides, polyvinylidene chlorides; vinylcarboxylic acid polymers and vinylcarboxylic ester polymers such as polyacrylic acids, polymethacrylic acids, polymethyl acrylates, polymethyl methacrylates and polyethyl methacrylates; ethylene-methacrylic acid copolymers, ethylene-methacrylic ester copolymers, ethylene-vinyl acetate copolymers, and ethylene-vinyl alcohol copolymers; polycarbonates and polymethacrylates; polyesters such as polyethylene terephthalates and polybutylene terephthalates; polyamides such as nylon 6, nylon 11, nylon 12, nylon 46, nylon 66, nylon M XD6, wholly aromatic polyamides and semiaromatic polyamides; polyacetals; and blends of these resins.

Among these thermoplastic resins, polyolefin is preferable, low-density polyethylene, medium-density polyethylene, high-density polyethylene, linear low-density polyethylene, polypropylene, and an ethylene-propylene copolymer are more preferable, and polypropylene is particularly preferable. The polypropylene may be a polypropylene elastomer.

In a case where the thermoplastic resin (A) is the polyolefin, the compatibility between the thermoplastic resin (A) and the copolymer (B) described later is particularly excellent, and a good resin composition can be obtained without lowering mechanical properties, and bleed-out to the surface, for example.

The thermoplastic resin (A) has a weight-average molecular weight (Mw) of 50,000 or more in terms of polystyrene as measured by gel permeation chromatography (GPC). The weight-average molecular weight (Mw) is preferably 60,000 to 2,000,000, and more preferably 80,000 to 1,000,000. When the weight-average molecular weight (Mw) of the thermoplastic resin (A) is 50,000 or more, a resin composition having excellent compatibility with the copolymer (B) can

be obtained.

In a case where the thermoplastic resin (A) is a polypropylene, MFR (JIS K 7210; 230°C test load 2.16 kgf) of the polypropylene is preferably in a range of 0.1 to 60 g/10 min, more preferably in a range of 0.3 to 20 g/10 min, and particularly preferably in a range of 0.3 to 10 g/10 min.

In a case where the MFR of polypropylene is within the above range, a molded body having excellent mechanical properties, heat resistance, and chemical resistance, for example, can be obtained.

<Content of thermoplastic resin (A)>

The content of the thermoplastic resin (A) in the entire resin composition of the present invention is 25 to 99.99% by mass, preferably 90 to 99.99% by mass, still more preferably 96.2 to 99.8% by mass, particularly preferably 97 to 99.4% by mass, and more preferably 98 to 99.4% by mass.

When the content of the thermoplastic resin (A) in the entire resin composition is less than the lower limit value, the properties of the thermoplastic resin (A) are impaired, and a molded body having excellent mechanical properties, heat resistance, and chemical resistance, for example, may not be obtained. On the other hand, when the content of the thermoplastic resin (A) in the entire resin composition is more than the upper limit value, problems such as deterioration in moldability, unstable discharge amount, and limitation in extrusion rate may occur.

[Copolymer (B)]

The copolymer (B) contains a structural unit derived from an α-olefin having 3 or more carbon atoms. The copolymer (B) satisfies requirements (b1-1) to (b1-3) described later.

Examples of the α-olefin having 3 or more carbon atoms include linear α-olefins such as propylene, 1-butene, 1-pentene, 1-hexene, 1-octene, 1-nonene, 1-decene, 1-undecene, 1-dodecene, 1-tricene, 1-tridecene, 1-tetradecene, 1-pentadecene, 1-hexadecene, 1-heptadecene, 1-octadecene, 1-nonadecene, and 1-eicosene, and branched α-olefins such as 3-methyl-1-pentene, 4-methyl-1-pentene, 8-methyl-1-nonene, 7-methyl-1-decene, 6-methyl-1-undecene, and 6,8-dimethyl-1-decene. These α-olefins can be used singly or in combination of two or more thereof.

The α-olefin having 3 or more carbon atoms is preferably an α-olefin having 3 to 20 carbon atoms, more preferably an α-olefin having 3 to 8 carbon atoms, and particularly preferably propylene.

<Requirement (b-1)>

The copolymer (B) has a kinematic viscosity at 100°C of 10 to 5,000 $mm^2/s$.

The kinematic viscosity is preferably 10 to 3,500 $mm^2/s$, more preferably 50 to 3,500 $mm^2/s$, still more preferably 50 to 2,500 $mm^2/s$, and particularly preferably 50 to 700 $mm^2/s$.

In the present invention, kinematic viscosity at 100°C is measured based on ASTM D 445.

When the kinematic viscosity at 100°C of the copolymer (B) is less than 10 $mm^2/s$, the content of low-molecular-weight components with high fluidity and volatility increases, similar to softeners such as commonly used process oils, and the amount of bleed-out or volatile from the resin composition or a molded body thereof may increase, which is not preferable. When the kinematic viscosity at 100°C of the copolymer (B) is higher than 5,000 $mm^2/s$, the fluidity is deteriorated and therefore, when the copolymer (B) is mixed with the thermoplastic resin (A), the stickiness may increase and the workability may decrease, which is not preferable. In other words, when the kinematic viscosity at 100°C of the copolymer (B) is within the above range, a resin composition or a molded body thereof having excellent heat aging resistance and workability can be obtained, which is preferable.

<Requirement (b-2)>

The copolymer (B) has a content of a structural unit derived from an α-olefin having 3 or more carbon atoms in the range of 60 to 85 mol%.

The content means a molar ratio of the structural unit derived from an α-olefin having 3 or more carbon atoms to all the structural units contained in the copolymer (B).

The content of the structural unit derived from an α-olefin having 3 or more carbon atoms in the copolymer (B) is preferably 63 to 83 mol%, and more preferably 67 to 80 mol%.

The resin composition of the present invention has excellent compatibility between the thermoplastic resin (A) such as a polyolefin and the copolymer (B) because the content of the structural unit derived from an α-olefin having 3 or more carbon atoms in the copolymer (B) is as high as 60 mol%, without causing problems such as bleed. In addition, when the content of the structural unit derived from an α-olefin having 3 or more carbon atoms in the copolymer (B) is 85 mol% or less, its crystallinity is reduced, and therefore it is well compatible with the thermoplastic resin (A) such as

polyolefins.

The content of structural units other than the structural unit derived from an α-olefin having 3 or more carbon atoms contained in the copolymer (B) is in the range of 15 to 40 mol%, preferably 17 to 37 mol%, and more preferably 20 to 33 mol%.

One embodiment of the copolymer (B) includes a copolymer of ethylene and an α-olefin having 3 or more carbon atoms.

<Requirement (b-3)>

The copolymer (B) has a weight-average molecular weight (Mw) of 1,000 to 30,000 in terms of polystyrene as measured by gel permeation chromatography (GPC) and a molecular weight distribution (Mw/Mn) of 2.5 or less.

The copolymer (B) preferably has a weight-average molecular weight (Mw) of 1,500 to 25,000, and more preferably 1,700 to 20,000.

When the weight-average molecular weight is smaller than the lower limit value, the mobility of the copolymer (B) in the resin composition increases, and thus bleed-out is likely to occur. When the weight-average molecular weight of the copolymer (B) is larger than the above upper limit value, the fluidity improvement effect may not be sufficient and the moldability may not improve, or the compatibility with the thermoplastic resin (A) may deteriorate, resulting in a decrease in mechanical properties and bleed-out.

The copolymer (B) preferably has a molecular weight distribution (Mw/Mn) of 2.3 or less, and more preferably 2.1 or less.

When the molecular weight distribution of the copolymer (B) is wide (Mw/Mn is large), it may contain a large number of low-molecular-weight or high-molecular-weight components, which may cause bleed-out or a decrease in mechanical properties, which is not preferable.

The weight-average molecular weight and molecular weight distribution of the copolymer (B) can be measured by gel permeation chromatography (GPC) calibrated using a standard substance (monodisperse polystyrene) with a known molecular weight.

The copolymer (B) may satisfy the following requirements (b-4) and (b-5) in addition to the above requirements (b-1) to (b-3). The copolymer (B) satisfying the requirements (b-4) and (b-5) can be produced, for example, by method (α) described later.

<Requirement (b-4)>

The copolymer (B) has a methyl group index measured by $^1$H-NMR in the range of 60 to 1300.

The methyl group index is preferably in the range of 70 to 125%, and more preferably in the range of 80 to 120%.

When the copolymer (B) has a methyl group index measured by $^1$ H-NMR within the above range, a resin composition having good mechanical properties can be obtained. The reason why a resin composition having good mechanical properties is obtained is considered to be that the interaction with the molecules of the thermoplastic resin (A) is enhanced by the methyl group in the copolymer (B).

Here, the methyl group index refers to the ratio of the integral value of the peak within the range of 0.50 to 1.15 ppm to the integral value of the peak within the range of 0.50 to 2.20 ppm when the copolymer (B) is dissolved in deuterochloroform and $^1$H-NMR is measured, and the solvent peak appearing at 7.24 ppm based on $CHCl_3$ in deuterochloroform is used as a reference.

Since the methyl group index is an index indicating the ratio of branches in the copolymer (B), when the methyl group index is the above lower limit value or more, the copolymer (B) has sufficient branches, and thus molecular chains are not easily oriented, molecular mobility is obtained, and good fluidity, flexibility, and lightweight properties are obtained, which is preferable. On the other hand, when the methyl group index of the copolymer (B) is the above upper limit value or less, the side chains of the copolymer (B) are not present too densely, the molecular mobility does not decrease, and good fluidity, flexibility, and lightweight properties can be maintained, which is preferable.

There is a concern that when the methyl group index is larger than the above upper limit value, the branched structure of the copolymer (B) increases, and thus the degradation of the molecular chain is likely to proceed when exposed to high temperature, resulting in a decrease in heat resistance. In other words, it is considered that when the methyl group index of the copolymer (B) is within the above range, the copolymer (B) exhibits excellent molecular mobility while maintaining heat resistance, and a resin composition exhibiting good fluidity, lightweight properties, flexibility, and heat resistance is easily obtained, which is preferable.

<Requirement (b-5)>

In the copolymer (B), no melting peak is observed when differential scanning calorimetry (DSC) is performed

in a temperature range of -100°C to 150°C.

The details of the differential scanning calorimetry are as follows.

Using a differential scanning calorimeter (for example, X-DSC-7000 manufactured by Seiko Instruments Inc), a sample of about 8 mg of the copolymer is placed in a simple airtight aluminum sample pan in a DSC cell, and the DSC cell is heated at a rate of 10°C/min from room temperature to 150°C under a nitrogen atmosphere, then held at 150°C for 5 minutes, and then cooled at a rate of 10°C/min to cool the DSC cell to - 100°C (cooling process). Then, after holding at -100°C for 5 minutes, the temperature is raised to 150°C at a rate of 10°C/min, and the temperature at which the enthalpy curve obtained during the warming process shows the maximum value is taken as the melting point (Tm), and the sum of heat absorption accompanying melting is taken as the heat of fusion (ΔH). When no melting peak is observed or the value of the heat of fusion (ΔH) is 1 J/g or less, it is considered that no melting point (Tm) is observed. The melting point (Tm) and heat of fusion (ΔH) are determined with reference to JIS K7121.

The method for producing the copolymer (B) is not particularly limited, and examples thereof include a method using a vanadium catalyst comprising a vanadium compound and an organoaluminum compound as described in patent literature, JPH021163B2 and JPH027998B2. Further, as a method for producing a copolymer with high polymerization activity, a method using a catalytic system comprising a metallocene compound such as zirconocene and an organoaluminumoxy compound (aluminoxane) as described in patent literature, JPS61221207A, JPH07121969B2, and JP2796376B may be used, and this method is more preferred because the chlorine content of the resulting copolymer and the 2,1-insertion of α-olefin can be reduced.

In the method using a vanadium catalyst, a small amount of chlorine is likely to remain in the resulting copolymer (B) because more chlorine compounds are used for the cocatalyst than in the method using a metallocene catalyst. On the other hand, the method using a metallocene catalyst is preferable in that the deterioration of the resin composition due to chlorine can be prevented since no chlorine remains substantially. The chlorine content is preferably 100 ppm or less, more preferably 50 ppm or less, still more preferably 20 ppm or less, and particularly preferably 5 ppm or less. The chlorine content can be quantified by various known methods. For example, there is a method in which an ethylene/α-olefin copolymer is placed in a sample boat and subjected to combustion decomposition in an $Ar/O_2$ gas stream at a set combustion furnace temperature of 900°C using ICS-1600 manufactured by Thermo Fisher Scientific Inc., and the gas generated at this time is absorbed in an absorbing solution and quantified by ion chromatography.

The method using a metallocene catalyst includes the following method (α).

<Method (α)>

A method (α) including a step of solution polymerizing ethylene and an α-olefin having 3 or more carbon atoms in the presence of a catalytic system, the catalytic system including:

a bridged metallocene compound (a) represented by the following formula 1 and at least one compound (b) selected from the group consisting of an organoaluminumoxy compound (b1) and a compound (b2) forming an ion pair by reacting with the bridged metallocene compound (a),

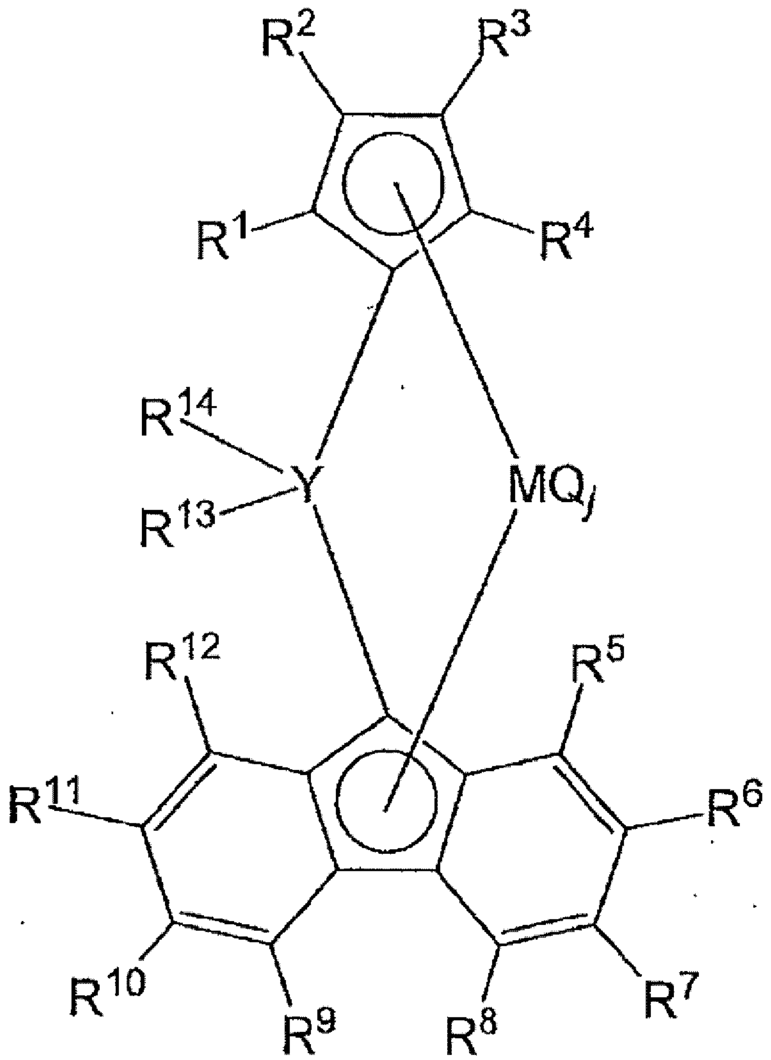

··· (Formula 1)

wherein $R^1$, $R^2$, $R^3$, $R^4$, $R^5$, $R^8$, $R^9$ and $R^{12}$ are each independently a hydrogen atom, a hydrocarbon group, or a silicon-containing hydrocarbon group, and a plurality of adjacent groups may be linked to each other to form a ring structure;

$R^6$ and $R^{11}$ are the same group and are a hydrogen atom, a hydrocarbon group, or a silicon-containing hydrocarbon group;

$R^7$ and $R^{10}$ are the same group and are a hydrogen atom, a hydrocarbon group, or a silicon-containing hydrocarbon group;

$R^6$ and $R^7$ may be bonded to a hydrocarbon having 2 to 3 carbon atoms to form a ring structure;

$R^{10}$ and $R^{11}$ may be bonded to a hydrocarbon having 2 to 3 carbon atoms to form a ring structure;

$R^6$, $R^7$, $R^{10}$, and $R^{11}$ are not hydrogen atoms at the same time;

Y is a carbon atom or a silicon atom;

$R^{13}$ and $R^{14}$ are each independently an aryl group;

M is Ti, Zr, or Hf;

Q is independently a halogen atom, a hydrocarbon group, an anionic ligand or a neutral ligand capable of coordinating to a lone pair of electrons; and

j is an integer of 1 to 4.

Here, the hydrocarbon group has 1 to 20 carbon atoms, preferably 1 to 15 carbon atoms, and more preferably 4 to 10 carbon atoms, and means, for example, an alkyl group and an aryl group, and the aryl group has 6 to 20 carbon atoms, and preferably 6 to 15 carbon atoms.

Examples of the silicon-containing hydrocarbon group include an alkyl group or an aryl group having 3 to 20 carbon atoms and containing 1 to 4 silicon atoms, and more specific examples thereof include a trimethylsilyl group, a

tertbutyldimethylsilyl group, and a triphenylsilyl group.

In the bridged metallocene compound represented by the formula 1, the cyclopentadienyl group may be substituted or unsubstituted.

In the bridged metallocene compound represented by the formula 1,

(i) at least one of the substituents ($R^1$, $R^2$, $R^3$ and $R^4$) bonded to the cyclopentadienyl group is preferably a hydrocarbon group;
(ii) at least one of the substituents ($R^1$, $R^2$, $R^3$ and $R^4$) is more preferably a hydrocarbon group having 4 or more carbon atoms; and
(iii) it is most preferable that the substituent ($R^2$ or $R^3$) bonded to the 3-position of the cyclopentadienyl group is a hydrocarbon group having 4 or more carbon atoms (for example, n-butyl group).

When at least two of $R^1$, $R^2$, $R^3$ and $R^4$ are substituents (that is, not hydrogen atoms), the substituents may be the same or different and at least one substituent is preferably a hydrocarbon group having 4 or more carbon atoms.

In the metallocene compound represented by the formula 1, $R^6$ and $R^{11}$ bonded to the fluorenyl group are the same, $R^7$ and $R^{10}$ are the same, but $R^6$, $R^7$, $R^{10}$ and $R^{11}$ are not hydrogen atoms at the same time. In the high-temperature solution polymerization of poly-$\alpha$-olefin, in order to improve polymerization activity, preferably neither $R^6$ nor $R^{11}$ are hydrogen atoms, and more preferably none of $R^6$, $R^7$, $R^{10}$, and $R^{11}$ are hydrogen atoms. For example, $R^6$ and $R^{11}$ bonded to the 2- and 7-positions of the fluorenyl group are the same hydrocarbon group having 1 to 20 carbon atoms, and preferably all are tert-butyl groups, and $R^7$ and $R^{10}$ are the same hydrocarbon group having 1 to 20 carbon atoms, and preferably all are tert-butyl groups.

The main chain portion (bonding portion, Y) linking the cyclopentadienyl group and the fluorenyl group is a bridge portion of two covalent bonds containing one carbon atom or silicon atom as a structural bridging portion imparting steric rigidity to the bridged metallocene compound represented by the formula 1. The bridging atom (Y) in the bridging moiety has two aryl groups ($R^{13}$ and $R^{14}$) which may be the same or different. Therefore, the cyclopentadienyl group and the fluorenyl group are bonded by a covalent bond bridging portion containing an aryl group. Examples of the aryl group include a phenyl group, a naphthyl group, an anthracenyl group, and a substituted aryl group, which are formed by replacing one or more aromatic hydrogens ($sp^2$ hydrogens) of a phenyl group, a naphthyl group, or an anthracenyl group with a substituent. Examples of the substituent of the substituted aryl group include a hydrocarbon group having 1 to 20 carbon atoms, a silicon-containing hydrocarbon group having 1 to 20 carbon atoms, and a halogen atom, and preferred examples thereof include a phenyl group. In the bridged metallocene compound represented by the formula 1, $R^{13}$ and $R^{14}$ are preferably the same from the viewpoint of ease of production.

In the bridged metallocene compound represented by the formula 1, Q is preferably a halogen atom or a hydrocarbon group having 1 to 10 carbon atoms. Examples of the halogen atom include fluorine, chlorine, bromine and iodine, and examples of the hydrocarbon group having 1 to 10 carbon atoms include methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexylmethyl, cyclohexyl, and 1-methyl-1-cyclohexyl. Also, when j is an integer of 2 or more, Q may be the same or different.

Examples of the bridged metallocene compound (a) include

ethylene [$\eta^5$-(3-tert-butyl-5-methylcyclopentadienyl)]($\eta^5$-fluorenyl)zirconium dichloride, ethylene [$\eta^5$-(3-tert-butyl-5-methylcyclopentadienyl)][$\eta^5$-(3,6-di-tert-butylfluorenyl)]zirconium dichloride, ethylene [$\eta^5$-(3-tert-butyl-5-methylcyclopentadienyl)][$\eta^5$-(2,7-di-tert-butylfluorenyl)]zirconium dichloride, ethylene [$\eta^5$-(3-tert-butyl-5-methylcyclopentadienyl)](octamethyloctahydrodibenzfluorenyl)z irconium dichloride, ethylene [$\eta^5$-(3-tert-butyl-5-methylcyclopentadienyl)](benzofluorenyl)zirconium dichloride, ethylene [$\eta^5$-(3-tert-butyl-5-methylcyclopentadienyl)] (dibenzofluorenyl)zirconium dichloride, ethylene [$\eta^5$-(3-tert-butyl-5-methylcyclopentadienyl)] (octahydrodibenzofluorenyl)zirconium dichloride, ethylene [$\eta^5$-(3-tert-butyl-5-methylcyclopentadienyl)][$\eta^5$-(2,7-diphenyl-3, 6-di-tert-butylfluorenyl)]zirconium dichloride, ethylene [$\eta^5$-(3-tert-butyl-5-methylcyclopentadienyl)][$\eta^5$-(2,7-dimethyl-3,6-di-tert-butylfluorenyl)]zirconium dichloride,
ethylene[$\eta^5$-(3-tert-butylcyclopentadienyl)]($\eta^5$-fluorenyl)zirconium dichloride, ethylene [$\eta^5$-(3-tert-butylcyclopentadienyl)][$\eta^5$-(3,6-di-tert-butylfluorenyl)]zirconium dichloride, ethylene [$\eta^5$-(3-tert-butylcyclopentadienyl)][$\eta^5$-(2,7-di-tert-butylfluorenyl)]zirconium dichloride, ethylene [$\eta^5$-(3-tert-butylcyclopentadienyl)] (octamethyloctahydrodibenzfluorenyl)zi rconium dichloride, ethylene [$\eta^5$-(3-tert-butylcyclopentadienyl)] (benzofluorenyl)zirconium dichloride, ethylene [$\eta^5$-(3-tert-butylcyclopentadienyl)] (dibenzofluorenyl)zirconium dichloride, ethylene [$\eta^5$-(3-tert-butylcyclopentadienyl)] (octahydrodibenzofluorenyl)zirconium dichloride, ethylene [$\eta^5$-(3-tert-butylcyclopentadienyl)][$\eta^5$-(2,7-diphenyl-3,6-di-tert-butylfluorenyl)]zirconium dichloride, ethylene [$\eta^5$-(3-tert-butylcyclopentadienyl)][$\eta^5$-(2,7-dimethyl-3,6-di-tert-butylfluorenyl)]zirconium dichloride,
ethylene [$\eta^5$-(3-n-butylcyclopentadienyl)]($\eta^5$-fluorenyl)zirconium dichloride, ethylene [$\eta^5$-(3-n-butylcyclopentadi-

enyl)][$\eta^5$-(3,6-di-tert-butylfluorenyl)]zirconium dichloride, ethylene [$\eta^5$-(3-n-butylcyclopentadienyl)][$\eta^5$-(2,7-di-tert-butylfluorenyl)]zirconium dichloride, ethylene [$\eta^5$-(3-n-butylcyclopentadienyl)] (octamethyloctahydrodibenzfluorenyl)zi rconium dichloride, ethylene [$\eta^5$-(3-n-butylcyclopentadienyl)] (benzofluorenyl)zirconium dichloride, ethylene [$\eta^5$-(3-n-butylcyclopentadienyl)] (dibenzofluorenyl)zirconium dichloride, ethylene [$\eta^5$-(3-n-butylcyclopentadienyl)] (octahydrodibenzofluorenyl)zirconium dichloride, ethylene [$\eta^5$-(3-n-butylcyclopentadienyl)][$\eta^5$-(2,7-diphenyl-3,6-di-tert-butylfluorenyl)]zirconium dichloride, ethylene [$\eta^5$-(3-n-butylcyclopentadienyl)][$\eta^5$-(2,7-dimethyl-3,6-di-tert-butylfluorenyl)]zirconium dichloride,

diphenylmethylene [$\eta^5$-(3-tert-butyl-5-methylcyclopentadienyl)]($\eta^5$-fluorenyl)zirconium dichloride, diphenylmethylene [$\eta^5$-(3-tert-butyl-5-methylcyclopentadienyl)][$\eta^5$-(3,6-di-tert-butylfluorenyl)]zirconium dichloride, diphenylmethylene [$\eta^5$-(3-tert-butyl-5-methylcyclopentadienyl)][$\eta^5$-(2,7-di-tert-butylfluorenyl)]zirconium dichloride, diphenylmethylene [$\eta^5$-(3-tert-butyl-5-methylcyclopentadienyl)](octamethyloctahydrodibenzfluorenyl)z irconium dichloride, diphenylmethylene [$\eta^5$-(3-tert-butyl-5-methylcyclopentadienyl)](benzofluorenyl)zirconium dichloride, diphenylmethylene [$\eta^5$-(3-tert-butyl-5-methylcyclopentadienyl)] (dibenzofluorenyl)zirconium dichloride, diphenylmethylene [$\eta^5$-(3-tert-butyl-5-methylcyclopentadienyl)] (octahydrodibenzofluorenyl)zirconium dichloride, diphenylmethylene [$\eta^5$-(3-tert-butyl-5-methylcyclopentadienyl)][$\eta^5$-(2,7-diphenyl-3,6-di-tert-butylfluorenyl)]zirconium dichloride, diphenylmethylene [$\eta^5$-(3-tert-butyl-5-methylcyclopentadienyl)][$\eta^5$-(2,7-dimethyl-3,6-di-tert-butylfluorenyl)]zirconium dichloride,

diphenylmethylene [$\eta^5$-(3-tert-butylcyclopentadienyl)]($\eta^5$-fluorenyl)zirconium dichloride, diphenylmethylene [$\eta^5$-(3-tert-butylcyclopentadienyl)][$\eta^5$-(3,6-di-tert-butylfluorenyl)]zirconium dichloride, diphenylmethylene [$\eta^5$-(3-tert-butylcyclopentadienyl)][$\eta^5$-(2,7-di-tert-butylfluorenyl)]zirconium dichloride, diphenylmethylene [$\eta^5$-(3-tert-butylcyclopentadienyl)] (octamethyloctahydrodibenzfluorenyl)zi rconium dichloride, diphenylmethylene [$\eta^5$-(3-tert-butylcyclopentadienyl)](benzofluorenyl)zirconium dichloride, diphenylmethylene [$\eta^5$-(3-tert-butylcyclopentadienyl)] (dibenzofluorenyl)zirconium dichloride, diphenylmethylene [$\eta^5$-(3-tert-butylcyclopentadienyl)](octahydrodibenzofluorenyl)zirconium dichloride, diphenylmethylene [$\eta^5$-(3-tert-butylcyclopentadienyl)][$p^5$-(2,7-diphenyl-3,6-di-tert-butylfluorenyl)]zirconium dichloride, diphenylmethylene [$\eta^5$-(3-tert-butylcyclopentadienyl)][$\eta^5$-(2,7-dimethyl-3,6-di-tert-butylfluorenyl)]zirconium dichloride,

diphenylmethylene [$\eta^5$-(3-n-butylcyclopentadienyl)]($\eta^5$-fluorenyl)zirconium dichloride, diphenylmethylene [$\eta^5$-(3-n-butylcyclopentadienyl)][$\eta^5$-(3,6-di-tert-butylfluorenyl)]zirconium dichloride, diphenylmethylene [$\eta^5$-(3-n-butylcyclopentadienyl)][$\eta^5$-(2,7-di-tert-butylfluorenyl)]zirconium dichloride, diphenylmethylene [$\eta^5$-(3-n-butylcyclopentadienyl)] (octamethyloctahydrodibenzfluorenyl)zi rconium dichloride, diphenylmethylene [$\eta^5$-(3-n-butylcyclopentadienyl)](benzofluorenyl)zirconium dichloride, diphenylmethylene [$\eta^5$-(3-n-butylcyclopentadienyl)](dibenzofluorenyl)zirconium dichloride, diphenylmethylene [$\eta^5$-(3-n-butylcyclopentadienyl)](octahydrodibenzofluorenyl)zirconium dichloride, diphenylmethylene [$\eta^5$-(3-n-butylcyclopentadienyl)][$\eta^5$-(2,7-diphenyl-3,6-di-tert-butylfluorenyl)]zirconium dichloride, diphenylmethylene [$\eta^5$-(3-n-butylcyclopentadienyl)][$\eta^5$-(2,7-dimethyl-3,6-di-tert-butylfluorenyl)]zirconium dichloride,

di(p-tolyl)methylene [$\eta^5$-(3-tert-butyl-5-methylcyclopentadienyl)]($\eta^5$-fluorenyl)zirconium dichloride, di(p-tolyl)methylene [$\eta^5$-(3-tert-butyl-5-methylcyclopentadienyl)][$\eta^5$-(3,6-di-tert-butylfluorenyl)]zirconium dichloride, di(p-tolyl)methylene [$\eta^5$-(3-tert-butyl-5-methylcyclopentadienyl)][$\eta^5$-(2,7-di-tert-butylfluorenyl)]zirconium dichloride, di(p-tolyl)methylene [$\eta^5$-(3-tert-butyl-5-methylcyclopentadienyl)] (octamethyloctahydrodibenzfluorenyl)z irconium dichloride, di(p-tolyl)methylene [$\eta^5$-(3-tert-butyl-5-methylcyclopentadienyl)] (benzofluorenyl)zirconium dichloride, di(p-tolyl)methylene [$\eta^5$-(3-tert-butyl-5-methylcyclopentadienyl)] (dibenzofluorenyl)zirconium dichloride, di(p-tolyl)methylene [$\eta^5$-(3-tert-butyl-5-methylcyclopentadienyl)] (octahydrodibenzofluorenyl)zirconium dichloride, di(p-tolyl)methylene [$\eta^5$-(3-tert-butyl-5-methylcyclopentadienyl)][$\eta^5$-(2,7-diphenyl-3,6-di-tert-butylfluorenyl)]zirconium dichloride, di(p-tolyl)methylene [$\eta^5$-(3-tert-butyl-5-methylcyclopentadienyl)][$\eta^5$-(2,7-dimethyl-3,6-di-tert-butylfluorenyl)]zirconium dichloride,

di(p-tolyl)methylene [$\eta^5$-(3-tert-butylcyclopentadienyl)]($\eta^5$-fluorenyl)zirconium dichloride, di(p-tolyl)methylene [$\eta^5$-(3-tert-butylcyclopentadienyl)][$\eta^5$-(3,6-di-tert-butylfluorenyl)]zirconium dichloride, di(p-tolyl)methylene [$\eta^5$-(3-tert-butylcyclopentadienyl)][$\eta^5$-(2,7-di-tert-butylfluorenyl)]zirconium dichloride, di(p-tolyl)methylene [$\eta^5$-(3-tert-butylcyclopentadienyl)] (octamethyloctahydrodibenzfluorenyl)zi rconium dichloride, di(p-tolyl)methylene [$\eta^5$-(3-tert-butylcyclopentadienyl)] (benzofluorenyl)zirconium dichloride, di(p-tolyl)methylene [$\eta^5$-(3-tert-butylcyclopentadienyl)] (dibenzofluorenyl)zirconium dichloride, di(p-tolyl)methylene [$\eta^5$-(3-tert-butylcyclopentadienyl)] (octahydrodibenzofluorenyl)zirconium dichloride, di(p-tolyl)methylene [$n^5$-(3-tert-butylcyclopentadienyl)][$\eta^5$-(2,7-diphenyl-3,6-di-tert-butylfluorenyl)]zirconium dichloride, di(p-tolyl)methylene [$\eta^5$-(3-tert-butylcyclopentadienyl)][$\eta^5$-(2,7-dimethyl-3,6-di-tert-butylfluorenyl)]zirconium dichloride,

di(p-tolyl)methylene [$\eta^5$-(3-n-butylcyclopentadienyl)]($\eta^5$-fluorenyl)zirconium dichloride, di(p-tolyl)methylene [$\eta^5$-(3-n-butylcyclopentadienyl)][$\eta^5$-(3,6-di-tert-butylfluorenyl)]zirconium dichloride, di(p-tolyl)methylene [$\eta^5$-(3-n-butylcyclopentadienyl)][$\eta^5$-(2,7-di-tert-butylfluorenyl)]zirconium dichloride, di(p-tolyl)methylene [$\eta^5$-(3-n-butylcyclopentadienyl)] (octamethyloctahydrodibenzfluorenyl)zi rconium dichloride, di(p-tolyl)methylene [$\eta^5$-(3-n-butylcyclopentadienyl)](benzofluorenyl)zirconium dichloride, di(p-tolyl)methylene [$\eta^5$-(3-n-butylcyclopentadienyl)](dibenzofluore-

nyl)zirconium dichloride, di(p-tolyl)methylene [$\eta^5$-(3-n-butylcyclopentadienyl)](octahydrodibenzofluorenyl)zirconium dichloride, di(p-tolyl)methylene [$\eta^5$-(3-n-butylcyclopentadienyl)](2,7-diphenyl-3,6-di-tert-butylfluorenyl)zirconium dichloride, and di(p-tolyl)methylene [$\eta^5$-(3-n-butylcyclopentadienyl)][$\eta^5$-(2,7-dimethyl-3,6-di-tert-butylfluorenyl)]zirconium dichloride.

Examples of the bridged metallocene compound (a) include compounds obtained by replacing the zirconium atom of these compounds with a hafnium atom and compounds obtained by replacing the chloro ligand with a methyl group, but the bridged metallocene compound (a) is not limited thereto.

Conventional aluminoxane can be used as the organoaluminumoxy compound (b1) used in the catalytic system in the method ($\alpha$). For example, linear or cyclic aluminoxanes represented by the following formulas 2 to 5 can be used. The organoaluminumoxy compound may contain a small amount of an organoaluminum compound.

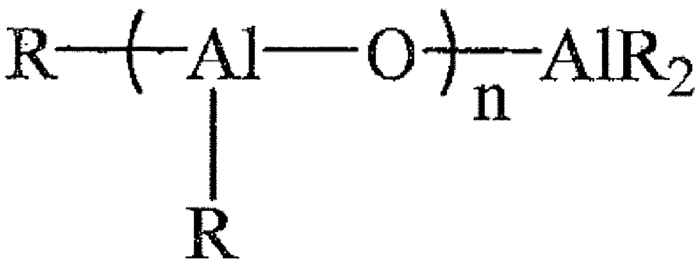

··· (Formula 2)

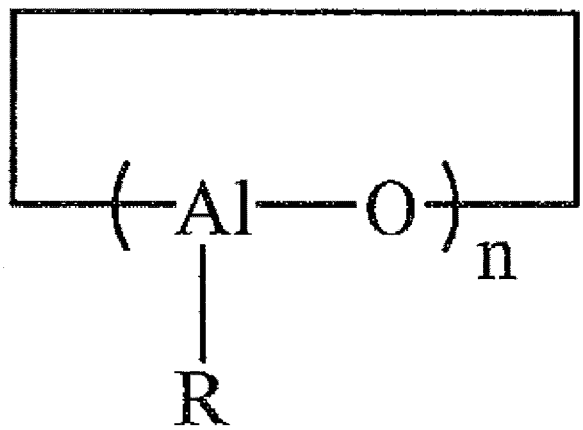

··· (Formula 3)

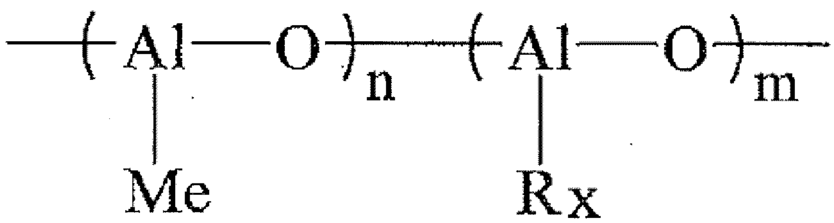

··· (Formula 4)

In the formulas 2 to 4, R is independently a hydrocarbon group having 1 to 10 carbon atoms, Rx is independently a hydrocarbon group having 2 to 20 carbon atoms, and m and n are independently an integer of 2 or more, preferably 3 or more, more preferably 10 to 70, and most preferably 10 to 50.

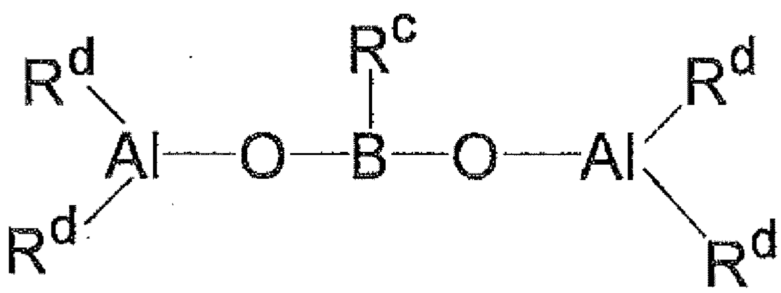

... (Formula 5)

In the formula 5, $R^c$ is a hydrocarbon group having 1 to 10 carbon atoms, and $R^d$ is independently a hydrogen atom, a halogen atom, or a hydrocarbon group having 1 to 10 carbon atoms.

In the formula 2 or 3, R is the methyl group (Me) of the organoaluminumoxy compound conventionally called "methylaluminoxane."

The methylaluminoxane is commonly used as an activator in polyolefin polymerization because it is readily available and has high polymerization activity. However, methylaluminoxane has been used in solutions of aromatic hydrocarbons such as toluene or benzene, which are environmentally undesirable, because it is difficult to dissolve in saturated hydrocarbons. Therefore, in recent years, a flexible body of methylaluminoxane represented by the formula 4 has been developed and used as aluminoxane dissolved in a saturated hydrocarbon. The modified methylaluminoxane represented by the formula 4 is prepared using trimethylaluminum and an alkylaluminum other than trimethylaluminum, for example, prepared using trimethylaluminum and triisobutylaluminum, as shown in patent literature, US4,960,878B and US5,041,584B. Aluminoxanes in which Rx is an isobutyl group are commercially available in the form of saturated hydrocarbon solutions under the trade names of MMAO and TMAO. (See Tosoh Finechem Corporation, Tosoh Research & Technology Review, Vol 47, 55(2003)).

As (ii) the compound (b2) forming an ion pair by reacting with the bridged metallocene compound contained in the catalytic system (hereinafter, referred to as "ionic compound" as necessary), Lewis acids, ionic compounds, borane, borane compounds, and carborane compounds may be used, and these are described in patent literature, KR10-0551147B, JP1989-501950A, JP1991-179005A, JP1991-179006A, JP1991-207703A, JP1991-207704A, and US5,321,106B, for example. Heteropoly compounds and isopoly compounds, for example, can be used as necessary, and ionic compounds described in patent literature, JP2004-51676A can be used. The ionic compound may be used singly or in combination of two or more thereof. More specifically, examples of Lewis acids include compounds represented by $BR_3$ (R is a fluoride, a substituted or unsubstituted alkyl group having 1 to 20 carbon atoms (such as a methyl group), or a substituted or unsubstituted aryl group having 6 to 20 carbon atoms (such as a phenyl group), for example), for example, trifluoroboron, triphenylboron, tris(4-fluorophenyl)boron, tris(3,5-difluorophenyl)boron, tris(4-fluorophenyl)boron, tris(pentafluorophenyl)boron, and tris(p-tolyl) boron. When the ionic compound is used, the amount of the ionic compound used and the amount of sludge generated are relatively small as compared with that of the organoaluminumoxy compound, which is economically advantageous. In the present invention, a compound represented by the following formula 6 is preferably used as the ionic compound.

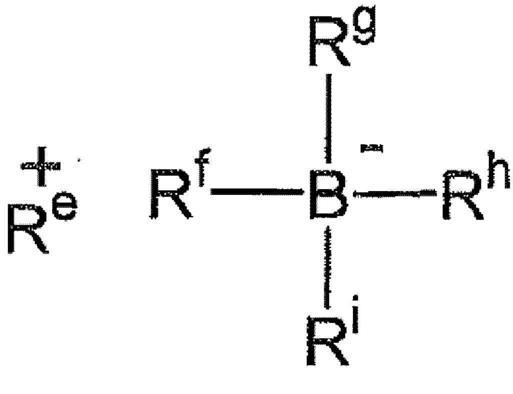

... (Formula 6)

In the formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ are each independently an organic group, preferably a hydrocarbon group having 1 to 20 carbon atoms, and more preferably an aryl group, for example, a pentafluorophenyl group. Examples of the carbenium cation include tris(methylphenyl)carbenium cation,

and tris(dimethylphenyl)carbenium cation, and examples of the ammonium cation include dimethylanilinium cation.

Preferred examples of the compound represented by the above formula 6 include N,N-dialkylanilinium salts, specifically, N,N-dimethylanilinium tetraphenylborate, N,N-dimethylanilinium tetrakis(pentafluorophenyl)borate, N,N-dimethylanilinium tetrakis (3,5-ditrifluoromethylphenyl) borate, N,N-diethylanilinium tetraphenylborate, N,N-diethylanilinium tetrakis(pentafluorophenyl)borate, N,N-diethylanilinium tetrakis(3,5-ditrifluoromethylphenyl)borate, N,N-2,4,6-pentamethylanilinium tetraphenylborate, and N,N-2,4,6-pentamethylanilinium tetrakis(pentafluorophenyl)borate.

The catalytic system used in the method (α) optionally further comprises (c) an organoaluminum compound. The organoaluminum compound serves to activate the bridged metallocene compound, the organoaluminumoxy compound, and the ionic compound, for example. Preferably, an organoaluminum represented by the following formula 7 and a complex alkylation product of a Group 1 metal and aluminum represented by the following formula 8 can be used as the organoaluminum compound.

$$R^a{}_mAl(OR^b)_nH_pX_q \qquad \text{(Formula 7)}$$

In the formula 7, $R^a$ and $R^b$ are each independently a hydrocarbon group having 1 to 15 carbon atoms, preferably 1 to 4 carbon atoms, X is a halogen atom, and m is an integer satisfying $0 < m \leq 3$, n is an integer satisfying $0 \leq n \leq 3$, p is an integer satisfying $0 < p \leq 3$, q is an integer satisfying $0 \leq q < 3$, and $m + n + p + q = 3$.

$$M^2AlR^a{}_4 \qquad \text{(Formula 8)}$$

In the formula 8, $M^2$ represents Li, Na, or K, and $R^a$ is a hydrocarbon group having 1 to 15 carbon atoms, preferably 1 to 4 carbon atoms.

Examples of the organoaluminum compound represented by the formula 7 include readily available trimethylaluminum and triisobutylaluminum. Examples of the alkyl complex compound of a Group 1 metal and aluminum represented by the formula 8 include $LiAl(C_2H_5)_4$ and $LiAl(C_7H_{15})_4$. Compounds similar to those represented by the formula 7 can also be used. For example, an organoaluminum compound in which at least two aluminum compounds are bonded via a nitrogen atom, such as $(C_2H_5)_2AlN(C_2H_5)Al(C_2H_5)_2$, can be used.

In the method (α), the amount of bridged metallocene compound (a) represented by the formula 1 is preferably 5 to 50% by weight based on the total catalyst composition. Preferably, (i) the amount of the organoaluminumoxy compound (b1) is 50 to 500 equivalents based on the number of moles of the bridged metallocene compound to be used, (ii) the amount of the compound (b2) forming an ion pair by reacting with the bridged metallocene compound is 1 to 5 equivalents based on the number of moles of the bridged metallocene compound to be used, and the amount of the organoaluminum compound (c) is 5 to 100 equivalents based on the number of moles of the bridged metallocene compound to be used.

The catalytic system used in method (α) may have, for example, the following [1] to [4].

[1] A bridged metallocene compound (a) represented by the formula 1, and (i) organoaluminumoxy compound (b1)
[2] A bridged metallocene compound (a) represented by the formula 1, (i) an organoaluminumoxy compound (b1), and an organoaluminum compound (c).
[3] A bridged metallocene compound (a) represented by the formula 1, (ii) a compound (b2) forming an ion pair by reacting with the bridged metallocene compound, and an organoaluminum compound (c).
[4] A bridged metallocene compound (a) represented by the formula 1, and (i) an organoaluminumoxy compound (b1), and (ii) a compound (b2) forming an ion pair by reacting with the bridged metallocene compound.

The bridged metallocene compound represented by the formula 1 (component (a)), (i) the organoaluminumoxy compound (component (b1)), (ii) the compound (b2) forming an ion pair by reacting with the bridged metallocene compound and/or the organoaluminum compound (component (c)) may be introduced in any order to the starting raw material monomers (mixture of ethylene and α-olefin having 3 to 20 carbon atoms). For example, components (a), (b), and/or (c) are introduced singly or in any order to a polymerization reactor charged with raw material monomers. Alternatively, optionally after mixing at least two of components (a), (b), and/or (c), the mixed catalyst composition is introduced into a polymerization reactor charged with raw material monomers.

In the method (α), the copolymer (B) is prepared by solution polymerization of ethylene and an α-olefin having 3 or more carbon atoms, for example, 3 to 20 carbon atoms, under the catalytic system. As the α-olefin having 3 to 20 carbon atoms, one or more of linear α-olefins such as propylene, 1-butene, 1-pentene, and 1-hexene, branched α-olefins such as isobutylene, 3-methyl-1-butene, and 4-methyl-1-pentene, and mixtures thereof can be used. Preferably, one or more α-olefins having 3 to 6 carbon atoms can be used, and more preferably, propylene can be used. The solution polymerization can be carried out using an inert solvent such as propane, butane, and hexane, or the olefin monomer itself as a medium. In the method (α), the copolymerization temperature is usually from 80 to 150°C, and preferably 90

to 120°C, and the pressure for copolymerization is usually atmospheric pressure to 500 $kgf/cm^2$, and preferably atmospheric pressure to 50 $kgf/cm^2$, which may vary depending on the reaction materials and conditions, for example.
The polymerization can be carried out batchwise, semicontinuously or continuously, preferably continuously.

<Other aspects>

The copolymer (B) may be a non-modified product or a modified product to which some polar group is imparted by graft modification. As vinyl compounds having a polar group used for the modification, a vinyl compound having an oxygencontaining group such as acid, acid anhydride, ester, alcohol, epoxy, or ether, a vinyl compound having a nitrogencontaining group such as isocyanate or amide, or a vinyl compound having a silicon-containing group such as vinylsilane, for example, can be used. Further, the copolymer (B) may be a partially chlorinated modified product using a method as described in patent literature, JP2020-97743A.
Among these, a vinyl compound having an oxygencontaining group is preferable, and specifically, an unsaturated epoxy monomer, an unsaturated carboxylic acid, and a derivative thereof are preferable. Examples of the unsaturated epoxy monomer include unsaturated glycidyl ethers and unsaturated glycidyl esters (for example, glycidyl methacrylate). Examples of the unsaturated carboxylic acid include acrylic acid, maleic acid, fumaric acid, tetrahydrophthalic acid, itaconic acid, citraconic acid, crotonic acid, isocrotonic acid, and Nadic acid (TM) (endocis-bicyclo[2,2,1]hept-5-ene-2,3-dicarboxylic acid).
Examples of the derivative of the unsaturated carboxylic acid can include an acid halide compound, an amide compound, an imide compound, an acid anhydride, and an ester compound of the unsaturated carboxylic acid. Specific examples thereof include malenyl chloride, maleimide, maleic anhydride, citraconic anhydride, monomethyl maleate, dimethyl maleate, and glycidyl maleate.
Among these, unsaturated dicarboxylic acids and their acid anhydrides are more preferred, and maleic acid, Nadic acid (TM) and their acid anhydrides are particularly preferred.
The position at which the vinyl compound having a polar group or a derivative thereof is grafted to the copolymer (B) is not particularly limited, and the unsaturated carboxylic acid or a derivative thereof may be bonded to any carbon atom of the copolymer (B).
When the thermoplastic resin (A) has a polar group, by imparting the polar group to the copolymer (B), good compatibility between the copolymer (B) and the thermoplastic resin (A) can be obtained, so that a decrease in mechanical properties and bleeding-out of the resin composition can be suppressed.
The modified copolymer (B) which is the modified product as described above can be prepared by conventionally known various methods, for example, the following methods.

(1) A method in which the non-modified copolymer (B) is mixed in an extruder or a batch-type reactor, for example, and a vinyl compound having a polar group or a derivative thereof, for example, is added to perform graft copolymerization.
(2) A method in which the non-modified copolymer (B) is dissolved in a solvent, and a vinyl compound having a polar group or a derivative thereof, for example, is added to perform graft copolymerization.

In any of the above methods, in order to efficiently perform graft copolymerization of the graft monomer of the vinyl compound having the polar group or a derivative thereof, the graft reaction is preferably performed in the presence of a radical initiator.
Examples of the radical initiator include organic peroxides and azo compounds. Examples of the organic peroxides include benzoyl peroxide, dichlorobenzoyl peroxide, and dicumyl peroxide, and examples of the azo compounds include azobisisobutylnitrile and dimethylazoisobutyrate.
As such a radical initiator, dialkyl peroxides such as dicumyl peroxide, di-tert-butyl peroxide, 2,5-dimethyl-2,5-di(tert-butylperoxy)hexyne-3, 2,5-dimethyl-2,5-di(tert-butylperoxy) hexane, and 1,4-bis(tert-butylperoxyisopropyl)benzene are preferably used.
These radical initiators are used in an amount of usually 0.001 to 1 parts by mass, preferably 0.003 to 0.5 parts by mass, and still more preferably 0.05 to 0.3 parts by mass, based on 100 parts by mass of the copolymer (B).
The reaction temperature in the graft reaction using a radical initiator as described above or the graft reaction performed without using a radical initiator is usually set in the range of 60 to 350°C, and preferably 120 to 300°C.
The graft amount of the vinyl compound having a polar group in the modified copolymer thus obtained is usually 0.01 to 15% by mass, and preferably 0.05 to 10% by mass when the mass of the modified copolymer is taken as 100% by mass.
<Content of copolymer (B)>
The content of the copolymer (B) in the entire resin composition of the present invention is 0.01 to 15% by mass, preferably 0.1 to 13% by mass, more preferably 0.5 to 12% by mass, and particularly preferably 1 to 10% by mass.

When the content of the copolymer (B) in the entire resin composition is less than the lower limit value, the fluidity improvement effect by the copolymer (B) is not sufficiently exhibited. On the other hand, when the content of the copolymer (B) in the entire resin composition exceeds the above upper limit value, the mechanical strength of the resin composition may decrease and bleed-out of the resin composition may occur, which is not preferable. In other words, when the content of the copolymer (B) is within the above range, it is preferable because a resin composition with excellent mechanical strength and moldability without bleed-out can be easily obtained. The above effects are particularly useful for the thermoplastic resin (A) having a low MFR and excellent mechanical strength, because the moldability can be improved while maintaining its characteristic mechanical strength.

[Other components]

The resin composition of the present invention may optionally contain additives such as stabilizers such as antioxidants, ultraviolet absorbers, and light stabilizers, metal soaps, fillers, flame retardants, antibacterial agents, antifungal agents, and pigments.

Examples of the stabilizer include antioxidants such as a hindered phenol compound, a phosphite compound, and a thioether compound; ultraviolet absorbers such as a benzotriazole compound and a benzophenone compound; and light stabilizers such as a hindered amine compound.

Examples of the metal soap include stearates such as magnesium stearate, calcium stearate, barium stearate, and zinc stearate.

Examples of the filler include glass fibers, silica fibers, metal fibers (stainless steel, aluminum, titanium, copper, for example), natural fibers (wood flour, wood fibers, bamboo, bamboo fibers, raw cotton, cellulose, nanocellulose, wool, straw, hemp, flax, kenaf, kapok, jute, ramie, sisal, henequen, corn, nut shells, wood pulp, rayon, cotton, for example), carbon black, graphite, activated carbon, graphite, carbon nanotubes, carbon nanofibers, carbon nanohorns, graphene nanoplatelets, nanoporous carbon, carbon fibers, silica, glass beads, silicates (calcium silicate, talc, clay, for example), metal oxides (iron oxide, titanium oxide, magnesium oxide, alumina, for example), metal carbonates (calcium carbonate, barium carbonate, for example), sulfates (calcium sulfate, barium sulfate, for example), and various metal powders (magnesium, silicon, aluminum, titanium, copper, for example), mica, glass flake, pumice powder, pumice balloon, aluminum hydroxide, magnesium hydroxide, basic magnesium carbonate, dolomite, calcium titanate, calcium sulfite, asbestos, montmorillonite, bentonite, molybdenum sulfide, organic fillers (lignin, starch, for example), and products containing the same. In particular, in fillers having anisotropy in structure, such as glass fibers, silica fibers, metal fibers, natural fibers, carbon nanotubes, carbon nanofibers, carbon nanohorns, and carbon fibers, the anisotropy is reduced and the characteristics of the fillers are easily damaged by the rupture of the fillers due to the shear during kneading, but the copolymer (B) is useful because it reduces the shear during kneading and makes it easier to maintain the anisotropy by the fluidity improvement effect.

Examples of the flame retardant include halogen compounds such as halogenated diphenyl ethers (for example, decabromodiphenyl ether and octabromodiphenyl ether) and halogenated polycarbonates; inorganic compounds such as antimony trioxide, antimony tetroxide, antimony pentoxide, sodium pyroantimonate, and aluminum hydroxide; and phosphorus compounds. Further, a compound such as tetrafluoroethylene can be added as a flame retardant aid to prevent dripping.

Examples of the antibacterial agent and antifungal agent include organic compounds such as imidazole compounds, thiazole compounds, nitrile compounds, haloalkyl compounds, and pyridine compounds; and inorganic substances and inorganic compounds such as silver, silver compounds, zinc compounds, copper compounds, and titanium compounds.

As the pigment, a pigment conventionally used for coloring synthetic resins can be used. Specific examples thereof include inorganic pigments such as metals such as aluminum, silver and gold; carbonates such as calcium carbonate and barium carbonate; oxides such as ZnO and $TiO_2$; hydroxides such as $Al_2O_3{\cdot}nH_2O$ and $Fe_2O_3{\cdot}nH_2O$; sulfates such as $CaSO_4$ and $BaSO_4$; nitrates such as $Bi(OH)_2NO_3$; chlorides such as $PbCl_2$; Chromates such as $CaCrO_4$ and $BaCrO_4$; chromites such as $CoCrO_4$, manganates, and permanganates; borate salts such as $Cu(BO)_2$; uranates such as $Na_2U_2O_7{\cdot}6H_2O$; nitrites such as $K_3Co(NO_2)_6{\cdot}3H_2O$; silicates such as $SiO_2$; arsenates and arsenites such as $CuAsO_3{\cdot}Cu(OH)_2$; acetates such as $Cu(C_2H_3O_2)_2{\cdot}Cu(OH)_2$; phosphates such as $(NH_4)_2MnO_2(P_2O_7)_2$; and aluminates, molybdates, zincates, antimonates, tungstates selenides, titanates, ferric cyanides, phthalates, CaS, ZnS, CdS, graphite, and carbon black; and organic pigments such as natural organic pigments such as cochineal lake and madder lake; nitroso pigments such as Naphthol Green Y and Naphthol Green B; nitro pigments such as Naphthol Yellow S and Pigment Chlorine 2G; Permanent Red 4R; azo pigments such as Hanza Yellow, Brilliant Carmine 68, and Scarlet 2R; and basic dye lakes such as Malachite Green and Rhodamine B, acid dye lakes such as Acid Green Lake and eosine lake, mordant dye lakes such as alizarin lake and purpurin lake, vat dye pigments such as Thioindigo red B and Indanthrene Orange, and phthalocyanine pigments such as Phthalocyanine Blue and Phthalocyanine Green.

The above additives can be used in any ratio and by any addition method as long as the effects of the present

invention are not impaired.

[Resin composition]

The resin composition according to the present invention is characterized by comprising the thermoplastic resin (A) and the copolymer (B) as essential components. The other components described above may be contained as long as the effects of the present invention are not impaired.

The composition and molecular weight of the resin composition of the present invention are not particularly limited as long as the effects of the present invention are not impaired, but from the viewpoint of obtaining good moldability and mechanical properties, the ratio of components having a molecular weight of less than 5,000 as observed by gel permeation chromatography (GPC) is preferably 0.7 to 4.5%, more preferably 1.0 to 4.5%, still more preferably 1.2 to 4.5%, and particularly preferably 1.3 to 3.0% based on the total components of the resin composition. The components having a molecular weight of less than 5,000 improves the moldability of the resin composition, but may cause problems such as a decrease in mechanical properties and bleed-out. When the ratio of components having a molecular weight of less than 5,000 in the resin composition is within the above range, the effect of improving moldability can be easily obtained while preventing problems such as a decrease in mechanical properties and bleed-out, which is preferable.

[Method for producing resin composition]

The resin composition according to the present invention is produced by melt-kneading the thermoplastic resin (A), the copolymer (B), and optional additives. As a method of melt-kneading, for example, a single-screw extruder or a twinscrew extruder can be used.

As a method for adding the copolymer (B) to the thermoplastic resin (A), various methods can be used as long as the effects of the present invention are not impaired. Examples of the method include a method in which the thermoplastic resin (A) and the copolymer (B) are dry-blended using a high-speed mixer such as a Henschel mixer or a tumbler and melt-kneading thereafter, and a melt-kneading method in which the copolymer (B) is directly added from an open portion or introduced by a side feeder or a liquid feed pump during melt-kneading of the thermoplastic resin (A).

The temperature during melt-kneading is not particularly limited as long as it is a temperature at which components such as the thermoplastic resin (A) melt, and for example, when the thermoplastic resin (A) is polypropylene, the temperature is usually in the range of 190 to 300°C, and preferably in the range of 200 to 250°C.

<Production method using copolymer (B)-containing masterbatch>

As a method for producing the resin composition according to the present invention, the copolymer (B) may be melt-kneaded with the thermoplastic resin (A) to produce a copolymer (B)-containing masterbatch, the thermoplastic resin (A) may be further added to the copolymer (B)-containing masterbatch, and the both may be melt-kneaded to produce the resin composition.

The thermoplastic resin (A) used for producing the copolymer (B)-containing masterbatch and the thermoplastic resin (A) added to the masterbatch after producing the masterbatch may be the same resin or different resins.

The method for producing the copolymer (B)-containing masterbatch is not particularly limited, and examples thereof include a method in which the copolymer (B), the thermoplastic resin (A), and optional additives are melt-kneaded with a single-screw extruder, a double-screw extruder, a plastomill, a Brabender, a kneader, a roll mixer, or a Banbury mixer, for example. Among these, the method of using a single-screw extruder or a double-screw extruder is preferable from the viewpoint of ease of mass production and ease of obtaining a pellet-shaped masterbatch, and the method of using a double-screw extruder is particularly preferable from the viewpoint of increasing the compatibility of the copolymer (B) and suppressing bleed-out.

The temperature during melt-kneading in the masterbatch production is not particularly limited as long as it is a temperature at which components such as the thermoplastic resin (A) melt, and for example, when the thermoplastic resin (A) is polypropylene, the temperature is usually in the range of 190 to 300°C, and preferably in the range of 200 to 250°C.

The blending amount of the copolymer (B) in the copolymer (B)-containing masterbatch used in the present invention is not particularly limited, but is usually in the range of 0.1 to 100 parts by mass, preferably in the range of 0.1 to 20 parts by mass, more preferably in the range of 0.5 to 10 parts by mass, and particularly preferably in the range of 3 to 10 parts by mass based on 100 parts by mass of the thermoplastic resin (A) contained in the copolymer (B)-containing masterbatch.

When the copolymer (B) is blended in a mass equal to or more than the lower limit value of the above range, the copolymer (B) facilitates softening and melting of the component of the thermoplastic resin (A), and when the copolymer (B)-containing masterbatch and the thermoplastic resin (A) to be further added are melt-kneaded in an

extruder, a good fluidity improving effect is obtained, which is preferable. Further, when the copolymer (B) is blended in a mass equal to or less than the upper limit value of the above range, bleed-out of the copolymer (B) can be suppressed, and a non-sticky copolymer (B)-containing masterbatch can be obtained, which is preferable.

The method for melt-kneading the copolymer (B)-containing masterbatch and the thermoplastic resin (A) added to the masterbatch is not particularly limited, and for example, the same method as the melt-kneading method in the method for producing the copolymer (B)-containing masterbatch described above can be employed.

The ratio of the amount of the copolymer (B)-containing masterbatch to the amount of the thermoplastic resin (A) added to the masterbatch is preferably 1 to 110 parts by mass of the copolymer (B)-containing masterbatch, more preferably 15 to 110 parts by mass, and particularly preferably 15 to 50 parts by mass, based on 100 parts by mass of the thermoplastic resin (A) added to the masterbatch. When the ratio of the amount of the copolymer (B)-containing masterbatch to the amount of the thermoplastic resin (A) added to the masterbatch is smaller than the lower limit value of the above range, the content of the copolymer (B) in the resin composition decreases, and the moldability improving effect may not be easily exhibited. On the other hand, when the ratio of the amount of the copolymer (B)-containing masterbatch to the amount of the thermoplastic resin (A) added to the masterbatch is larger than the upper limit value of the above range, the content of the copolymer (B) increases, and may cause a decrease in mechanical properties.

Further, when the resin composition according to the present invention is used as an adhesive or a coating agent, kneading can also be performed with various organic solvents in which the thermoplastic resin (A) and the copolymer (B) are dissolved.

[Molded body]

A molded body containing the resin composition can be obtained using the resin composition. The molded body is obtained, for example, by melt-kneading the thermoplastic resin (A) and the copolymer (B). At this time, as described above, the thermoplastic resin (A) may be further added to the masterbatch and melt-kneaded after the copolymer (B)-containing masterbatch is produced. Further, the resin composition may be molded immediately after melt-kneading to obtain the molded body.

Examples of molding methods include T-die molding, blow molding, injection molding, and other known molding methods.

For example, when an extruded sheet or film is formed by T-die extrusion molding, for example, using polypropylene as the thermoplastic resin (A), a molded body is obtained by extrusion molding at a temperature in the range of usually 170 to 300°C, preferably 180 to 270°C, and more preferably 190 to 250°C. A stretched film can also be obtained by stretching the film extruded from the extruder by, for example, the tenter method (longitudinal and transverse stretching, transverse and longitudinal stretching), simultaneous biaxial stretching, or uniaxial stretching.

Further, when the molded body of the present invention is obtained by extrusion blow molding using polypropylene as the thermoplastic resin (A), a tubular parison is usually extruded from a die at a resin temperature in the range of 170 to 240°C, the parison is held in a mold having a shape to be imparted, air is then blown into the parison, and the parison is attached to the mold usually at a resin temperature in the range of 160 to 230°C to obtain a molded body. In addition, the film may be stretched to an appropriate magnification during extrusion blow molding.

In the case of injection molding using polypropylene as the thermoplastic resin (A), the cylinder temperature during injection molding is usually 180 to 400°C, preferably 200 to 300°C, and more preferably 200 to 250°C, the injection pressure is usually in the range of 10 to 200 MPa, preferably 20 to 150 MPa, and the mold temperature is usually in the range of 20 to 200°C, preferably 20 to 80°C, and more preferably 20 to 60°C.

EXAMPLES

The present invention will be described below with reference to Examples, but the present invention is not limited to these Examples.

In the following Examples and Comparative Examples, each physical property was measured or evaluated by the following methods.

[Kinematic viscosity]

The kinematic viscosity was measured based on ASTM D 445 at 100°C using a fully automatic viscometer CAV-4 manufactured by Canon Inc.

[Propylene content]

The $\alpha$-olefin copolymer was measured using ECP500 type nuclear magnetic resonance apparatus manufactured by JEOL Ltd., using a mixed solvent of ortho-dichlorobenzene/deuterated benzene (80/20% by volume) as a solvent, sample concentration of 55 mg/0.6 mL, measurement temperature of 120°C, observation nucleus of $^{13}C$ (125 MHz), sequence of single-pulse proton decoupling, pulse width of 4.7 μs (45° pulse), repetition time of 5.5 seconds, number of scans of 10,000 or more, and 27.50 ppm as the reference value of chemical shift.

The propylene content was determined from the $^{13}C$-NMR spectrum measured as described above based on the reports of G. J. Ray (Macromolecules, 10, 773 (1977)), J. C. Randall (Macro-molecules, 15, 353 (1982)), and K. Kimura (Polymer, 25, 4418 (1984)).

[Weight-average molecular weight (Mw) and molecular weight distribution (Mw/Mn)]

The weight-average molecular weight (Mw) and number-average molecular weight (Mn) of the copolymer (B) were measured using the following high-performance GPC measurement equipment. Calibration was performed using monodisperse polystyrene having a known molecular weight as a standard substance. The molecular weight distribution (Mw/Mn) was calculated from the obtained molecular weights.

Measuring equipment: HLC8320GPC manufactured by Tosoh Corporation
Mobile phase: THF (manufactured by Wako Pure Chemical Industries, Ltd., stabilizer-free, liquid chromatography grade)
Column: Two TSKgel Super Multipore HZ-M manufactured by Tosoh Corporation were connected in series.
Sample concentration: 5 mg/mL
Mobile phase flow rate: 0.35 mL/min
Measurement temperature: 40°C
Standard sample for calibration curve: PStQuick MP-M manufactured by Tosoh Corporation

Further, the molecular weight of the polyethylene wax used in Comparative Examples was measured using the following measuring equipment. Calibration was performed using monodisperse polystyrene having a known molecular weight as a standard substance.

Measuring equipment: HLC-8321GPC/HT type manufactured by Tosoh Corporation
Mobile phase: o-dichlorobenzene
Column: Two TSKgel GMH6-HT and two TSKgel GMH6-HTL manufactured by Tosoh Corporation connected in series Sample concentration: 0.1 mg/mL
Mobile phase flow rate: 1.0 mL/min
Measurement temperature: 140°C
Standard sample for calibration curve: Monodisperse polystyrene #3 std set manufactured by Tosoh Corporation

[B value]

Using o-dichlorobenzene /benzene-$d_6$ (4/1 [vol/vol%]) as a measurement solvent, the $^{13}C$-NMR spectrum was measured under measurement conditions of a measurement temperature of 120°C, a spectral bandwidth of 250 ppm, a pulse repetition time of 5.5 seconds, and a pulse width of 4.7 sec (45° pulse) (100 MHz, ECX400P, JEOL Ltd.), or under measurement conditions of a measurement temperature of 120°C, a spectral bandwidth of 250 ppm, a pulse repetition time of 5.5 seconds, and a pulse width of 5.0 sec (45° pulse) (125 MHz, Bruker BioSpin AVANCE III cryo-500), and the B value was calculated based on the following formula (1). The assignment of peaks was carried out with reference to the previously published literature.

$$B = P_{O1-O2}/(2 \times P_{O1} \times P_{O2}) \quad (1)$$

In the above formula (1), $P_{O1}$ represents the molar fraction content of the structural unit derived from the first olefin, $P_{O2}$ represents the molar fraction content of the structural unit derived from the second olefin, and $P_{O1-O2}$ represents the molar fraction of the "first olefin-second olefin" chain of all dyad chains.

[Unsaturated bond amount]

Using o-dichlorobenzene-$d_4$ as a measurement solvent, $^1H$-NMR spectrum (400 MHz, ECX400P, JEOL Ltd.) was measured under measurement conditions of a measurement temperature of 120°C, a spectral bandwidth of 20 ppm, a pulse repetition time of 7.0 seconds, and a pulse width of 6.15 μsec (45° pulse). Using the solvent peak (ortho-dichlorobenzene 7.1 ppm) as the chemical shift standard, the ratio of the integral value of the main peak observed at 0 to 3 ppm and the peak derived from the unsaturated bond observed at 4 to 6 ppm, the amount of unsaturated bonds per 1000 carbon atoms (bonds/1000C) was calculated.

[Chlorine content]

Using ICS-1600 manufactured by Thermo Fisher Scientific Inc, a sample of the copolymer was placed in a sample boat and subjected to combustion decomposition in an $Ar/O_2$ stream at a set combustion furnace temperature of 900°C. The gas generated at this time was absorbed in an absorbing solution, and the chlorine content was quantified by ion chromatography.

[Density]

The density was measured in accordance with JIS K7112 (density-gradient tube method).

[Melting point]

Using X-DSC-7000 manufactured by Seiko Instruments Inc., a sample of about 8 mg of the copolymer was placed in a simple airtight aluminum sample pan in a DSC cell, and the DSC cell was heated at a rate of 10°C/min from room temperature to 150°C under a nitrogen atmosphere, then held at 150°C for 5 minutes, and then cooled at a rate of 10°C/min to cool the DSC cell to -100°C (cooling process). Then, after holding at -100°C for 5 minutes, the temperature was raised to 150°C at a rate of 10°C/min, and the temperature at which the enthalpy curve obtained during the warming process shows the maximum value was taken as the melting point (Tm), and the sum of heat absorption accompanying melting was taken as the heat of fusion (ΔH). When no melting peak was observed or the value of the heat of fusion (ΔH) was 1 J/g or less, the melting point (Tm) was considered not to be observed. The melting point (Tm) and heat of fusion (ΔH) were determined based on JIS K7121.

[Methyl group index]

Using EX270 type nuclear magnetic resonance apparatus manufactured by JEOL Ltd., the measurement was performed using deuterochloroform as a solvent, sample concentration of 55 mg/0.6 mL, room temperature as measurement temperature, observation nucleus of $^1H$ (270 MHz), sequence of single-pulse, pulse width of 6.5 μs (45° pulse), repetition time of 5.5 seconds, number of scans of 16, and 7.24 ppm of the solvent peak based on $CHCl_3$ in deuterochloroform as the reference value of chemical shift.

In the spectrum obtained from the $^1H$-NMR spectrum measured as described above, the ratio of the integral value of the peak in the range of 0.50 to 1.15 ppm to the integral value of the peak in the range of 0.50 to 2.20 ppm was used as a methyl group index. Here, the range of 0.50 to 2.20 ppm includes almost all peaks based on α-olefin (co)polymers. Of this range, peaks based on methyl groups are likely to fall within the range of 0.50 to 1.15 ppm.

Thermoplastic resin (A)

Polypropylene F113G manufactured by Prime Polymer Co., Ltd. (hereinafter referred to as thermoplastic resin (a)) was used as the thermoplastic resin (A).

Copolymer (B) and other copolymers

A copolymer (b-1) produced by the following production method was used as the copolymer (B). Copolymers (b-2) and (b-3) produced by the following production method were used as other copolymers.

[Method for producing copolymer (b-1)]

Into a glass polymerizer with a fully nitrogen-substituted internal volume of 1 L, 250 mL of decane was charged, the temperature in the system was raised to 130°C, and then ethylene, propylene and hydrogen were continuously fed into the polymerizer at a flow rate of 15 L/hr, 85 L/hr, and 100 L/hr, respectively, and stirred at a stirring rotation speed of 600 rpm. Next, 0.2 mmol of triisobutylaluminum was charged into the polymerizer, and then a premix of 2.022 mmol of MMAO and 0.00670 mmol of [methylphenylmethylene($\eta^5$-cyclopentadienyl)($\eta^5$-2,7-di-t-butylfluorenyl)]zirconium dichloride in toluene for 15 minutes or more was charged into the polymerizer to initiate polymerization. Thereafter, continuous supply of ethylene, propylene, and hydrogen was continued, and polymerization was performed at 130°C

for 15 minutes. After stopping the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The obtained polymer was dried overnight under reduced pressure at 80°C to obtain 0.83 g of a propyleneethylene copolymer (copolymer (b-1)). After the hydrogenation operation, the amount of unsaturated bonds was less than 0.1/1000C, and the chlorine content was less than 0.1 ppm. The obtained copolymer had a propylene content of 70.0 mol%, Mw of 4,235, Mw/Mn of 1.7, B value of 1.2, 100°C kinematic viscosity of 100 $mm^2/s$, and the methyl group index measured by $^1H$-NMR was 83%.

[Method for producing copolymer (b-2)]

Into a glass polymerizer with a fully nitrogen-substituted internal volume of 1 L, 250 mL of decane was charged, the temperature in the system was raised to 130°C, and then ethylene, propylene and hydrogen were continuously fed into the polymerizer at a flow rate of 25 L/hr, 75 L/hr, and 100 L/hr, respectively, and stirred at a stirring rotation speed of 600 rpm. Next, 0.2 mmol of triisobutylaluminum was charged into the polymerizer, and then a premix of 1.213 mmol of MMAO and 0.00402 mmol of [methylphenylmethylene($\eta^5$-cyclopentadienyl)($\eta^5$-2,7-di-t-butylfluorenyl)]zirconium dichloride in toluene for 15 minutes or more was charged into the polymerizer to initiate polymerization. Thereafter, continuous supply of ethylene, propylene, and hydrogen was continued, and polymerization was performed at 130°C for 15 minutes. After stopping the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The obtained polymer was dried overnight under reduced pressure at 80°C to obtain 0.77 g of a propyleneethylene copolymer (copolymer (b-2)). After the hydrogenation operation, the amount of unsaturated bonds was less than 0.1/1000C, and the chlorine content was less than 0.1 ppm. The obtained copolymer had a propylene content of 51.2 mol%, Mw of 4,172, Mw/Mn of 1.7, B value of 1.2, 100°C kinematic viscosity of 102 $mm^2/s$, and the methyl group index measured by $^1H$-NMR was 54%.

[Method for producing copolymer (b-3)]

Into a glass polymerizer with a fully nitrogen-substituted internal volume of 1 L, 250 mL of decane was charged, the temperature in the system was raised to 130°C, and then ethylene, propylene and hydrogen were continuously fed into the polymerizer at a flow rate of 7 L/hr, 93 L/hr, and 100 L/hr, respectively, and stirred at a stirring rotation speed of 600 rpm. Next, 0.2 mmol of triisobutylaluminum was charged into the polymerizer, and then a premix of 4.332 mmol of MMAO and 0.0144 mmol of [methylphenylmethylene($\eta^5$-cyclopentadienyl)($\eta^5$-2,7-di-t-butylfluorenyl)]zirconium dichloride in toluene for 15 minutes or more was charged into the polymerizer to initiate polymerization. Thereafter, continuous supply of ethylene, propylene, and hydrogen was continued, and polymerization was performed at 130°C for 15 minutes. After stopping the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The obtained polymer was dried overnight under reduced pressure at 80°C to obtain 0.87 g of a propyleneethylene copolymer (copolymer (b-3)). After the hydrogenation operation, the amount of unsaturated bonds was less than 0.1/1000C, and the chlorine content was less than 0.1 ppm. The obtained copolymer had a propylene content of 86.0 mol%, Mw of 4,208, Mw/Mn of 1.7, B value of 1.2, 100°C kinematic viscosity of 104 $mm^2/s$, and the methyl group index measured by $^1H$-NMR was 118%.

The obtained polymer was a cloudy, grease-like semisolid with no fluidity, and was extremely poor in handleability. Therefore, it is considered to be clear that the copolymer (b-3) does not have sufficient performance as a plasticizer for a thermoplastic resin required in the present invention, and therefore, in Comparative Examples described below, studies using the copolymer (b-3) were not performed.

The physical property values of the obtained copolymers (b-1), (b-2), and (b-3) are shown in Table 1. In Table 1, the content of structural units derived from propylene is indicated as "propylene content".

[Table 1]

| | Copolymer (b-1) | Copolymer (b-2) | Copolymer (b-3) |
|---|---|---|---|
| Kinematic viscosity ($mm^2/s$) | 100 | 102 | 104 |
| Propylene content (mol%) | 70.0 | 51.2 | 86.0 |
| Weight- average molecular weight (Mw) | 4,235 | 4,172 | 4,208 |

(continued)

| | Copolymer (b-1) | Copolymer (b-2) | Copolymer (b-3) |
|---|---|---|---|
| Molecular weight distribution (Mw/Mn) | 1.7 | 1.7 | 1.7 |
| B-value | 1.2 | 1.2 | 1.2 |
| Methyl group index (%) | 83 | 54 | 118 |

Polyethylene wax

Polyethylene wax produced by the following production method was used as the polyethylene wax.

[Method for producing polyethylene wax]

1. Preparation of catalyst

In a glass autoclave having an internal volume of 1.5 liters, 25 g of commercially available anhydrous magnesium chloride was suspended in 500 ml of hexane. While the mixture was kept at 30°C and stirred, 92 ml of ethanol was added dropwise over 1 hour, and the reaction was further continued for 1 hour. After completion of the reaction, 93 ml of diethylaluminum monochloride was added dropwise over 1 hour, and the reaction was further continued for 1 hour. After completion of the reaction, 90 ml of titanium tetrachloride was added dropwise, and the reaction vessel was heated to 80°C and reacted for 1 hour. After completion of the reaction, the solid portion was washed with hexane until free titanium was no longer detected by decantation. The solid after washing was prepared into a hexane suspension, and the titanium concentration was quantified by titration, and subjected to the following experiments.

2. Production of polyethylene wax

Into a stainless steel autoclave with a fully nitrogen-substituted internal volume of 2 liters, 930 ml of hexane and 70 ml of propylene were charged, and hydrogen was introduced to 0.1 MPa (gauge pressure). Next, after raising the temperature in the system to 170°C, 0.1 mmol of triethylaluminum, 0.4 mmol of ethylaluminum sesquichloride, and a hexane suspension of the obtained solid were injected with ethylene so that the amount of the titanium component was 0.008 mmol in atomic conversion, thereby initiating polymerization. Thereafter, only ethylene was continuously supplied to keep the total pressure at 2.9 MPa (gauge pressure), and polymerization was performed at 170°C for 40 minutes.

After stopping the polymerization by adding a small amount of ethanol into the system, unreacted ethylene and propylene were purged. The obtained polymer solution was dried overnight at 100°C under reduced pressure to obtain polyethylene wax. The obtained polyethylene wax had a density of 926 $kg/m^3$, a weight-average molecular weight (Mw) of 10,270, a molecular weight distribution (Mw/Mn) of 2.8 and a melting point of 109°C.

[Example 1 and Example 2]

[T-die film molding]

A 20mmφ single-screw extruder (D2020, manufactured by Toyo Seiki Seisaku-sho, Ltd.) was equipped with a T-die having a die width of 150 mm, a rotation speed was set to 25 rpm, a cylinder temperature and a die temperature was set to 205°C, and the thermoplastic resin (a) was charged from the hopper. The copolymer (b-1) was continuously fed from a plunger-type metering pump with an extension nozzle installed separately at the discharge port of the hopper to the blending amount shown in Table 2, and extrusion film molding was performed to obtain a film having a thickness of 50 um.

[Comparative Example 1]

A film having a thickness of 50 μm was obtained in the same manner as in Example 1, except that the copolymer (B) was not blended.

[Comparative Example 2]

A film having a thickness of 50 μm was obtained in the same manner as in Example 1, except that the copolymer (b-1) in Example 1 was changed to the copolymer (b-2).

[Comparative Example 3]

The thermoplastic resin (a) and the polyethylene wax were dry-blended in the formulation shown in Table 2 in advance before film molding, and a film having a thickness of 50 μm was obtained in the same manner as in Example 1 without blending the copolymer (B).

The resin compositions or films obtained in the above Examples and Comparative Examples were measured for extrusion torque, discharge amount, tensile breaking strength, tensile breaking elongation and tensile product, and evaluated for film appearance by the following methods. Table 2 shows the results.

[Extrusion torque]

The resin was charged from the hopper. Then, after 10 minutes from setting the extruder to the molding conditions described above, the torque exhibited by the extruder was measured for 1 minute, and the average value was obtained. When this value is small, even if the extrusion torque swings to the increasing side during molding, it becomes difficult to reach the upper limit value of the device capacity, and therefore, it becomes easy to reduce the unevenness of the discharge amount during molding. In addition, when this value is small, it becomes difficult to reach the upper limit value of the device capacity when the screw rotation speed of the extruder is increased, so the discharge amount can be easily adjusted.

[Discharge amount]

The resin was charged from the hopper. Then, after 10 minutes from setting the extruder to the molding conditions described above, the mass of the film molded for 1 minute was weighed, and the discharge amount per hour was determined from the value.

[Tensile breaking strength, tensile breaking elongation, and tensile product]

The film was measured in the machine direction according to JIS K7127, and the strength and elongation at breakage of the film were determined and defined as tensile breaking strength and tensile breaking elongation, respectively. Also, the value of the product of the tensile breaking strength and the tensile breaking elongation was taken as the tensile product. The larger this value is, the more difficult it is for the obtained film to be broken, and in particular, a value of 30,000 MPa·% or more indicates that the film is resistant to breakage.

[Film appearance]

The appearance of the obtained film was evaluated by visual observation of the surface and by touch. A film in which it was confirmed that an oily substance that was sticky when touched bled out the film surface was evaluated as "bleed", and a film in which it was not confirmed that an oily substance that was sticky when touched bled out the film surface was evaluated as "no bleed".

[Table 2]

| | | Ex. 1 | Ex. 2 | Comp. Ex. 1 | Comp. Ex. 2 | Comp. Ex. 3 |
|---|---|---|---|---|---|---|
| Thermoplastic resin (a) | % by mass | 90 | 99 | 100 | 90 | 99.9 |
| Copolymer (b-1) | % by mass | 10 | 1 | | | |
| Copolymer (b-2) | % by mass | | | | 10 | |
| Copolymer (b-3) | % by mass | | | | | |
| Polyethylene wax | % by mass | | | | | 0.1 |
| Extrusion torque | N·m | 25 | 40 | 55 | 22 | 13 |
| Discharge amount | kg/h | 2.1 | 1.2 | 0.9 | 1.1 | 0.7 |

(continued)

| | | Ex. 1 | Ex. 2 | Comp. Ex. 1 | Comp. Ex. 2 | Comp. Ex. 3 |
|---|---|---|---|---|---|---|
| Tensile breaking strength | MPa | 68 | 67 | 68 | 48 | 60 |
| Tensile breaking elongation | % | 512 | 492 | 434 | 389 | 446 |
| Tensile product | MPa·% | 34,816 | 32,964 | 29,425 | 18,672 | 26,682 |
| Film appearance | - | no bleed | no bleed | no bleed | bleed | no bleed |

## Claims

**1.** A resin composition comprising:

25 to 99.99% by mass of a thermoplastic resin (A) having a weight-average molecular weight (Mw) of 50,000 or more in terms of polystyrene as measured by gel permeation chromatography (GPC); and
0.01 to 15% by mass of a copolymer (B) containing a structural unit derived from an $\alpha$-olefin having 3 or more carbon atoms and satisfying the following requirements (b-1) to (b-3):

(b-1) the kinematic viscosity at 100°C is 10 to 5,000 $mm^2/s$;
(b-2) the content of a structural unit derived from an $\alpha$-olefin having 3 or more carbon atoms is in the range of 60 to 85 mol%; and
(b-3) the weight-average molecular weight (Mw) in terms of polystyrene as measured by gel permeation chromatography (GPC) is 1,000 to 30,000 and the molecular weight distribution (Mw/Mn) is 2.5 or less.

**2.** The resin composition according to claim 1, wherein the thermoplastic resin (A) is a polyolefin.

**3.** The resin composition according to claim 1 or 2, wherein the $\alpha$-olefin having 3 or more carbon atoms is propylene.

**4.** The resin composition according to any one of claims 1 to 3, wherein the thermoplastic resin (A) is a polypropylene.

**5.** A method for producing the resin composition according to claim 1, comprising:

a step (1) of performing the following method ($\alpha$) to obtain the copolymer (B), which further satisfies the following requirements (b-4) and (b-5); and
a step (2) of melt-kneading the thermoplastic resin (A), the copolymer (B), and optionally an additive to obtain a resin composition,
wherein

(b-4) the methyl group index measured by $^1H$-NMR is in a range of 60 to 130%; and
(b-5) no melting peak is observed in differential scanning calorimetry (DSC) in a temperature range of -100°C to 150°C,

method ($\alpha$): a method comprising a step of solution polymerizing ethylene and an $\alpha$-olefin having 3 or more carbon atoms in the presence of a catalytic system, the catalytic system comprising:

a bridged metallocene compound (a) represented by the following formula 1 and at least one compound (b) selected from the group consisting of an organoaluminumoxy compound (b1) and a compound (b2) forming an ion pair by reacting with the bridged metallocene compound (a),

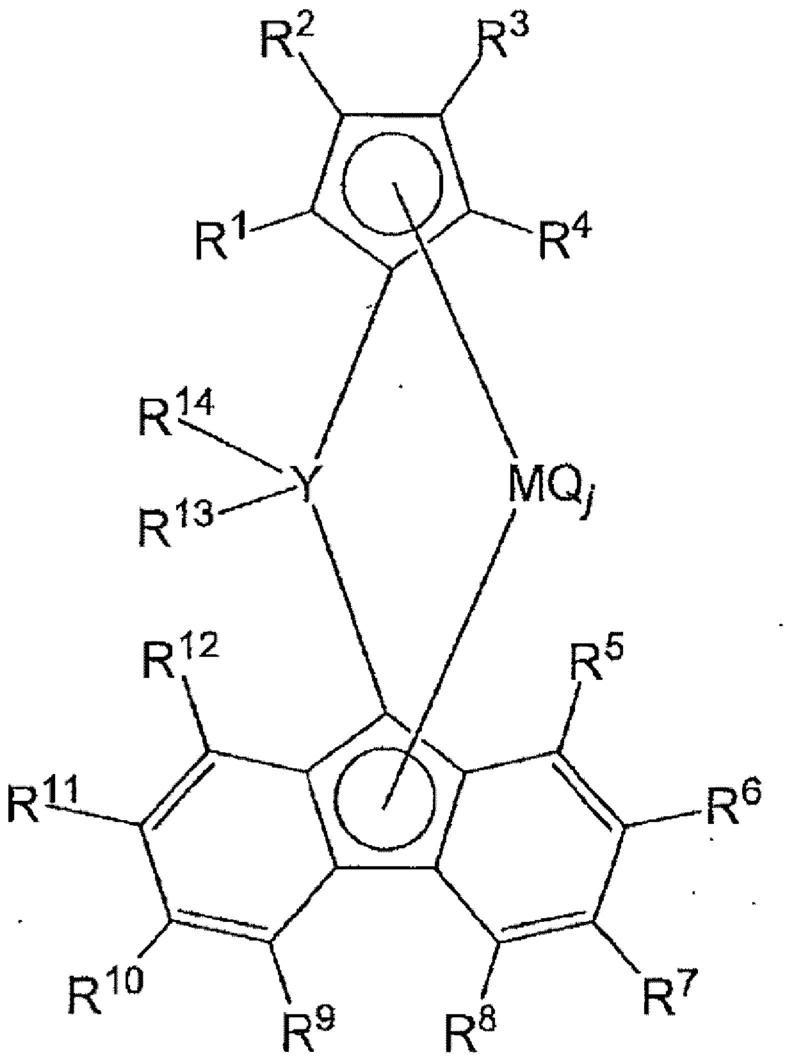

... (Formula 1)

wherein $R^1$, $R^2$, $R^3$, $R^4$, $R^5$, $R^8$, $R^9$ and $R^{12}$ are each independently a hydrogen atom, a hydrocarbon group, or a silicon-containing hydrocarbon group, and a plurality of adjacent groups may be linked to each other to form a ring structure;

$R^6$ and $R^{11}$ are the same group and are a hydrogen atom, a hydrocarbon group, or a silicon-containing hydrocarbon group;

$R^7$ and $R^{10}$ are the same group and are a hydrogen atom, a hydrocarbon group, or a silicon-containing hydrocarbon group;

$R^6$ and $R^7$ may be bonded to a hydrocarbon having 2 to 3 carbon atoms to form a ring structure;

$R^{10}$ and $R^{11}$ may be bonded to a hydrocarbon having 2 to 3 carbon atoms to form a ring structure;

$R^6$, $R^7$, $R^{10}$, and $R^{11}$ are not hydrogen atoms at the same time;

Y is a carbon atom or a silicon atom;

$R^{13}$ and $R^{14}$ are each independently an aryl group;

M is Ti, Zr, or Hf;

Q is independently a halogen atom, a hydrocarbon group, an anionic ligand or a neutral ligand capable of coordinating to a lone pair of electrons; and

j is an integer of 1 to 4.

**INTERNATIONAL SEARCH REPORT**

International application No. **PCT/JP2021/036930**

**A. CLASSIFICATION OF SUBJECT MATTER**

***C08F 210/00***(2006.01)i; ***C08L 23/00***(2006.01)i; ***C08L 23/12***(2006.01)i; ***C08L 101/00***(2006.01)i
FI: C08L101/00; C08L23/00; C08L23/12; C08F210/00

According to International Patent Classification (IPC) or to both national classification and IPC

**B. FIELDS SEARCHED**

Minimum documentation searched (classification system followed by classification symbols)

C08F210/00; C08L23/00; C08L23/12; C08L101/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-218459 A (SUNALLOMER LTD.) 26 December 2019 (2019-12-26) | 1-5 |
| A | JP 2019-189818 A (SUNALLOMER LTD.) 31 October 2019 (2019-10-31) | 1-5 |
| A | JP 2008-539290 A (BASELL POLIOLEFINE ITALIA S. R. L.) 13 November 2008 (2008-11-13) | 1-5 |
| A | JP 2005-508416 A (DOW GLOBAL TECHNOLOGIES INC.) 31 March 2005 (2005-03-31) | 1-5 |
| A | JP 2008-163140 A (JAPAN POLYPROPYLENE CORP.) 17 July 2008 (2008-07-17) | 1-5 |
| A | JP 2012-162631 A (BRIDGESTONE CORP.) 30 August 2012 (2012-08-30) | 1-5 |
| A | JP 2001-348469 A (CHISSO CORP.) 18 December 2001 (2001-12-18) | 1-5 |
| A | JP 2018-172532 A (MITSUI CHEMICALS, INC.) 08 November 2018 (2018-11-08) | 1-5 |

☐ Further documents are listed in the continuation of Box C.

☑ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **16 November 2021** | **30 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/036930**

| Patent document cited in search report | Publication date (day/month/year) | Patent family member(s) | Publication date (day/month/year) |
|---|---|---|---|
| JP 2019-218459 A | 26 December 2019 | WO 2019/245058 A1 | |
| | | EP 3810661 A1 | |
| JP 2019-189818 A | 31 October 2019 | WO 2019/208836 A1 | |
| | | EP 3784734 A1 | |
| JP 2008-539290 A | 13 November 2008 | US 2009/0306298 A1 | |
| | | WO 2006/114357 A1 | |
| | | EP 1874838 A1 | |
| | | KR 10-2008-0013956 A | |
| | | CN 101163727 A | |
| | | TW 200643087 A | |
| JP 2005-508416 A | 31 March 2005 | JP 2005-508415 A | |
| | | US 2003/0204017 A1 | |
| | | WO 2003/040195 A1 | |
| | | EP 1724379 A1 | |
| JP 2008-163140 A | 17 July 2008 | (Family: none) | |
| JP 2012-162631 A | 30 August 2012 | US 2014/0005296 A1 | |
| | | WO 2012/105258 A1 | |
| | | EP 2671895 A1 | |
| | | KR 10-2013-0113524 A | |
| | | CN 103492439 A | |
| JP 2001-348469 A | 18 December 2001 | (Family: none) | |
| JP 2018-172532 A | 08 November 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H0580492 B
- JP 2003528948 A
- JP H021163 B
- JP H027998 B
- JP S61221207 A
- JP H07121969 B
- JP 2796376 B
- US 4960878 B
- US 5041584 B
- KR 100551147 B
- JP 1501950 A
- JP 3179005 A
- JP 3179006 A
- JP 3207703 A
- JP 3207704 A
- US 5321106 B
- JP 2004051676 A
- JP 2020097743 A


### Non-patent literature cited in the description


- Tosoh Research & Technology Review. Tosoh Finechem Corporation, 2003, vol. 47, 55
- **G. J. RAY.** *Macromolecules,* 1977, vol. 10, 773
- **J. C. RANDALL.** *Macro-molecules,* 1982, vol. 15, 353
- **K. KIMURA.** *Polymer,* 1984, vol. 25, 4418